# EUROPEAN PATENT APPLICATION

(11) **EP 1 557 276 A1**
(43) Date of publication of application: **27.07.2005**
(21) Application number: 03758956.1
(22) Date of filing: 27.10.2003
(51) Int. Cl.: B41J 2/45, B41J 2/445

(54) **LIGHT SOURCE FOR IMAGE WRITING DEVICE, AND PRODUCTION METHOD FOR LIGHT SOURCE**

(30) Priority: 30.10.2002 JP 2002315652; 30.10.2002 JP 2002315654; 30.10.2002 JP 2002315653
(71) Applicant: MATSUSHITA ELECTRIC INDUSTRIAL CO., LTD., Kadoma-shi, Osaka 571-8501 (JP)
(72) Inventor: NAKAMURA, Tetsuroh, Takaraduka-shi, Hyogo 665-0847 (JP); MASUMOTO, Ken-ichi, Hirakata-shi, Osaka 573-1182 (JP); TOYOMURA, Yuji, Fukuoka-shi, Fukuoka 819-0373 (JP); HAMANO, Takafumi, Chikushi-gun Nakagawamachi, Fukuoka 811- (JP); GYOTOKU, Akira, Miyaki-gun Kiyamamachi, Saga 841-0205 (JP); MARUYAMA, Hideki, Chikushino-shi, Fukuoka 818-0003 (JP)
(74) Representative: Dempster, Benjamin John Naftel
(86) International application number: PCT/JP2003/013736
(87) International publication number: WO 2004/039595

(57) **Abstract**

An image forming apparatus includes a light source provided with a converting means for converting the advancing direction of light emitted from the light source, whereby the direction in which the light source is disposed can be determined regardless of a direction in which light is emitted. The advancing direction of the light emitted from a light emitting element is converted into a direction in which the light transmitting means can transmit the light, so that the luminous intensity on the photosensitive drum can be increased. It is designed so as to increase a light emitting area of the light emitting element and condense the light emitted therefrom, in result the luminous flux density can be improved. The light emitting element applies a flat luminous unit, which is combined with a light transmitting means in one optical piece.

## Description

### Technical Field

The present invention relates to a light source for an image writing apparatus and a production method of the light source.

### Background Art

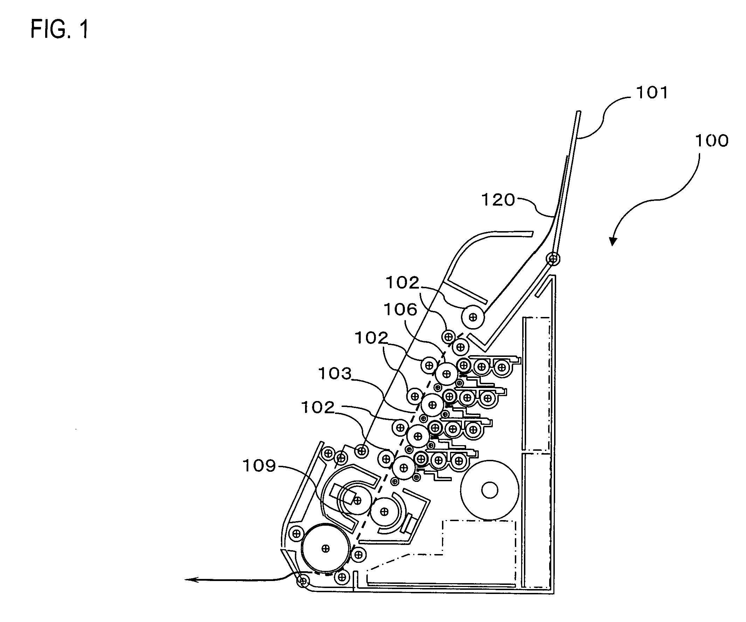

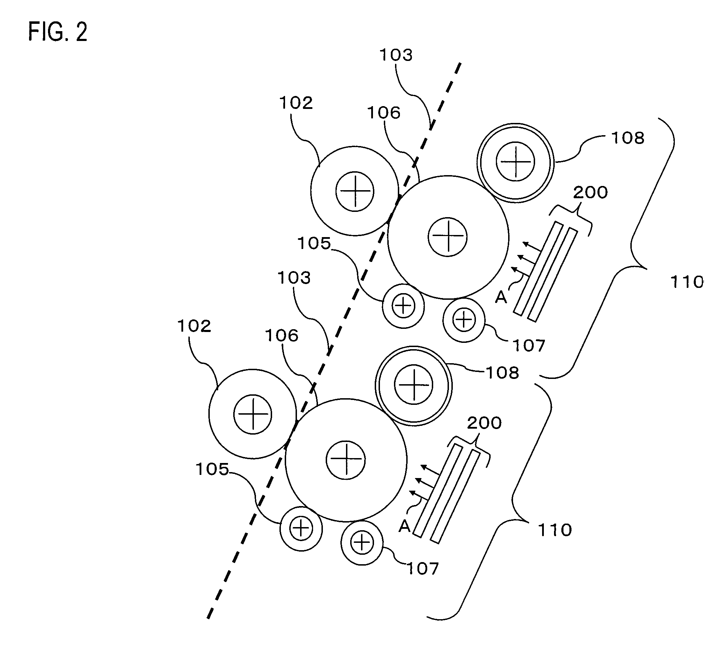

Some color laser printers (which is called a printer hereinafter) 100 employ the printing method called the tandem method that enables the printer to print in parallel a visible image consisting of four colors, Y (yellow), M (magenta), C (cyan) and B (black), as shown in Fig. 1, so that the printer can perform the high-speed printing. In order to form the four-colored visible image in parallel, the printer 100 employing the tandem method is provided with 4 sets of writing systems 110, each system including a electric discharger 105, a photosensitive drum 106, an electric charger 107, a light source 200, and a developing device 108, as shown in Fig. 2.

A recording paper 120 on a tray 101 in Fig. 1 is fed to a traveling route 103 inside the printer 100 by a carrying roller 102. While the carrying roller 120 is carrying the recording paper 120, the writing light emitted from the light source 200 forms a latent image on each photosensitive drum 106 per color, and then the developing device 108 forms a visible image.

The visible image formed on each photosensitive drum 106 is transcribed on the recording paper 120 on the traveling route 103, and then a fixing device 109 fixes the visible image thereon. After that, the recording paper 120 is outputted from the printer 100.

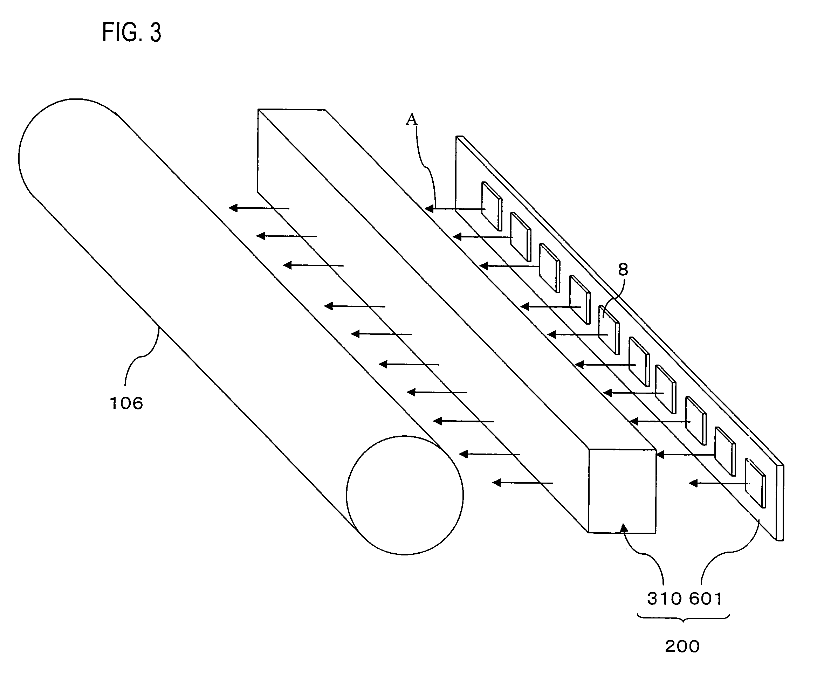

The light source 200 is provided with a substrate 601 extended to the main scanning direction on which light emitting elements 8 consist of a number of LEDs (Light emitting Diode) are formed, as shown in Fig. 3. The light emitting element 8 emits a ray of light A in the direction perpendicular to the substrate 601. As shown in Fig. 3, the ray A passes through the light transmitting means 310 such as the rod lens or the fiber lens, which composes the light source 200, and forms the latent image on the photosensitive drum 106.

The light transmitting means 310 has a narrow angular aperture and the depth of the focus is kept to be long so that the clear latent image may be formed on the photosensitive drum in simple manner.

### Disclosure of the Invention

In order to emit light A toward the photosensitive drum 106, the substrate 601 is configured as shown in a short side of substrate 601 is parallel with the sub scanning direction (the direction perpendicular to the axis of the photosensitive drum 106) and a surface of the substrate 601 on which the light emitting elements 8 are formed faces the photosensitive drum 106.

It is said that the light emitting element 8 must be in a specific size in order that the light source 200 outputs the luminous intensity enough to form a latent. And the substrate 601 must be provided with accessories such as a driver to emit light from the light emitting element 8. Therefore, the short side of the substrate 601 should be a predetermined length.

Under the above-mentioned configuration, that is, when the short side of the substrate 601 is parallel with the sub scanning direction and the surface provided with the light emitting elements 8 faces the photosensitive drum 106, if the short side of the substrate is long, the sub scanning direction of the writing system 110 per color becomes long.

In the tandem type of the printer 100, 4 colors writing systems 110 are disposed in series in the sub scanning direction. Even if the length of the writing system 110 becomes a little long in the sub scanning direction, slightly, the printer 100 becomes big.

Recently, the laser printer has been required to print an image with high resolution. In order to print the image with high resolution, the printer must increase the resolution in the sub scanning direction. This increases the number of the scanning per length unit in the sub scanning direction, with the result that the printing time gets long. To print the image with high resolution in a short time, the exposure time per sub scanning line should be shorten. But in such case, it is not possible to obtain the exposure enough to form the latent image on the photosensitive drum 106.

Additionally, in order to print the image with high resolution by an electro photographic type of printer 100, a number of the light emitting elements must be disposed in the sub scanning direction with narrowing each space. In order to dispose a number of the light emitting elements with narrowing each space, the size of the light emitting element 8 must be small. If the size of the light emitting element 8 was small, the brightness of each light emitting element went down. And this reduces the luminous intensity on the photosensitive drum 106.

A method, which increases the exposure on the photosensitive drum 106 without slowing down the printing speed and instead of changing the size of the light emitting element 8, is to improve the light transmission efficiency by enlarging an angle aperture of a lens composing the light transmitting means 310. However, when the angle aperture was enlarged, the focal depth was made short. Accordingly, it is hard to form a clear latent image on the photosensitive drum 106. And, another method is to increase the brightness of the light emitting element 8 by applying much electric field thereon. But, applying the much electric field on the light emitting element 8 not only reduces the luminescence life of the light emitting element 8 but also increases the power consumption.

The present invention has an object to provide a light source for an image writing apparatus, the light source that forms a latent image with high resolution without preventing the downsizing of the printer and has a long luminescence life, and another object to provide a production method thereof.

The present invention suggests a light source for image writing apparatus that can radiate light to a normal direction to a photosensitive drum regardless independent of the direction of a substrate provided with the light emitting elements by converting an advancing direction of the light emitted from a light emitting element.

The light source of image writing apparatus of the invention is provided with a converting means for converting the advancing direction of light. The converting means may be a prism or a light guide for converting the advancing direction of light by reflecting the light therein once or plural times.

In a conventional configuration, which is not provided with the converting means, the short side of the substrate should be parallel with the sub-scanning direction, and the light emitting surface should face the photosensitive drum, in order that the light irradiates the photosensitive drum. But the light source of the invention, which is provided with the converting means, can eliminate the necessity of such configuration. In other words, the light source of the invention is configured that, when the height of the substrate (the length from the light emitting surface to the upper end of the sealing glass) is less than the short side of the substrate, the height direction of the substrate is parallel with the subs-canning direction, and a surface formed by the longitudinal direction and height direction of the substrate faces the photosensitive drum. According to such configuration, it is possible to carry out the light source having a short sub-scanning direction, and downsize the light source.

Additionally, in the invention, the light source of the image writing means is provided with the directivity means for imparting the directivity to the light from the light emitting element and guiding the light to the light transmitting means. According to the configuration, it is possible to improve the efficiency of the light transmission keeping the angle aperture small. The light transmitting means may be a fiber lens that is formed by a plurality of single lenses. Besides, one of single lenses may correspond to one of light emitting elements so as to pass the light emitted from the light emitting element through the single lens.

According to the above-mentioned configuration, the light from the light emitting element is guided to the light transmitting means efficiently, and it is possible to eliminate the necessity of using the light transmitting means having a large angle aperture.

A condensing means is provided between the light emitting element and the photosensitive drum, whereby the light is transmitted to the photosensitive drum through the condensing means. When the light, even if the light has a large light emitting area, irradiates the photosensitive drum, a sectional area becomes small. Therefore, the light emitting element with the large light emitting area can form a latent image with small pixels on the photosensitive drum.

When the electronic photographic type of printer prints the image with high resolution, a number of light emitting elements must be disposed within a specific section in the main scanning direction. Accordingly, the light emitting element has a limitation in the length of the main scanning direction. But the length of the sub scanning direction is not limited in particular. In the case of condensing the light emitted from the light emitting element extended to the sub scanning direction by the condensing means, the high luminous flux density can be increased. Therefore, after the condensing means condenses the light emitted from the light emitting elements extended to the sub scanning direction, the light irradiate the photosensitive drum, so that the sufficient exposure to form the latent image can be obtained.

Therefore, it is not necessary to enlarge the angle aperture of the light transmitting means in order to obtain the exposure enough to form the latent image as above. And with keeping the deep focal depth, the sufficient exposure to form the latent image can be obtained.

When a flat luminous type of light emitting element is formed direct on the light transmitting means, the light emitted from the light emitting element is transmitted direct to the light transmitting means without passing through a low refractive index layer with the low directivity. And most of the rays of light reach the photosensitive drum without a leakage, with the result that the light can reach the photosensitive drum keeping the sufficient luminous intensity. Accordingly, since it is not necessary to apply the high electric field on the light emitting element to increase the brightness, it is possible to form the latent image with high resolution without reducing the luminescence life. And since the angle aperture of the light transmitting means is not required to be large to form the latent image, the focal depth can be maintained in deep.

In addition, it may configure that one of the light emitting elements corresponds to a plurality of the single lenses. Under such configuration, a width of the single lens is smaller than a diameter of the light emitting element, so that the light emitting element can be formed with disregard to the positional relation between the light emitting element and the single lens. This makes the producing easy.

Moreover, the light source of image writing apparatus may be configured to be provided with a directivity means between the light emitting element and the light transmitting means, and to form the light transmitting means, the directivity means, and the light emitting element in a unit optically. The directivity means, optically formed with the light transmitting means and the light emitting element, has a mesa structure, and the light emitting element is disposed on an upper surface of the mesa structure. According to such configuration, the transmission efficiency can be improved.

Besides, the directivity means may be a light guide for imparting the directivity to the ray of light by reflecting the light therein once or plural times.

The light source, of which the flat luminous type of the light emitting element is formed direct on the light transmitting means, can be produced according to the following way. A transparent electrode element is formed on the light transmitting means directly, and a light emitting layer element including a flat luminous unit is formed on the transparent electrode element, and then a metal electrode layer is formed on the light emitting element.

Otherwise, when the directivity means is formed with the light transmitting means and the light emitting element in a piece, the directivity means is formed on the light transmitting means directly, and the transparent electrode element is formed on the directivity means, and the transparent electrode element is formed on the directivity means, and the light emitting element consisting of the flat luminous unit is formed on the transparent electrode element, and then the metal electrode element is formed on the light emitting element.

### Brief Description of the Drawings

Fig. 1 is an outline view of the printer.
Fig. 2 is an enlarged view of the light source part.
Fig. 3 is an outline view of the light source.
Fig. 4 is a sectional view of the light source using the prism as the converting means and the photosensitive drum.
Fig. 5 shows a production process of the light emitting element.
Fig. 6 is an external view of the light transmitting means.
Fig. 7 is an outline view of the light source and the photosensitive drum of the image writing apparatus.
Fig. 8 is a diagram showing a shape of the light guide.
Fig. 9 is a sectional view of the light source using a light guide as the converting means and the photosensitive drum.
Fig. 10 is a sectional view of the light source using a light guide as the converting means.
Fig. 11 is a sectional view of the light source using a prism as the converting means.
Fig. 12 is a sectional view of the light source using a prism as the converting means.
Fig. 13 is a sectional view of the light source using a light guide as the converting means and the photosensitive drum.
Fig. 14 is a sectional view of the light source using a prism as the converting means.
Fig. 15 is a sectional view of the light source using a light guide as converting means.
Fig. 16 is an outline view of the light source and the photosensitive drum of the image writing apparatus in the invention.
Fig. 17 is an outline view of the transparent substrate on which small projections are formed.
Fig. 18 is a diagram showing a track of the ray of light emitted from the light emitting element.
Fig. 19 shows a production process of the light emitting element.
Fig. 20 shows a process of producing a small projection by means of the anisotropic etching.
Fig. 21 is a general view of a bead sheet and the light transmitting means.
Fig. 22 is a diagram showing the production process of forming the light emitting element on the bead sheet.
Fig. 23 is a diagram showing a track of the ray of light emitted from the light emitting element.
Fig. 24 shows the light source of the image writing apparatus using a micro lens alley as the directivity means.
Fig. 25 is an outline view of the light source and the photosensitive drum of the image writing means using a micro lens alley as the directivity means.
Fig. 26 is a diagram showing a track of the ray of light emitted from the light emitting element.
Fig. 27 is a diagram showing a track of the ray of light emitted from the light emitting element.
Fig. 28 is a diagram showing a process of producing the light guide by means of the etching.
Fig. 29 is an outline view of the light source and the photosensitive drum using a cylindrical lens as the condensing means.
Fig. 30 is an outline view of the light source and the photosensitive drum using a micro lens as the condensing means.

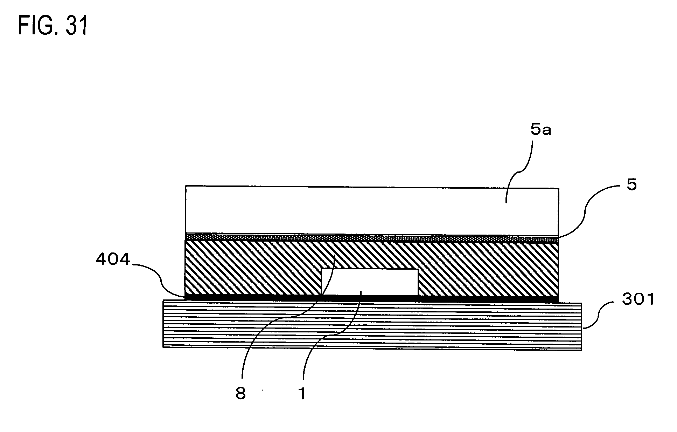

Fig. 31 is an enlarged diagram of a periphery of the ray of light emitting element when the ray of light emitted from the light emitting element is emitted to the metal electrode layer side.
Fig. 32 is a diagram showing the light source when the ray of light emitted from the light emitting element is emitted to the metal electrode layer side.
Fig. 33 is an outline view of the light source in embodiment 11 of the invention.
Fig. 34 is an outlined block diagram of the light emitting element.
Fig. 35 is an outline view of the light source in embodiment 12 of the invention.
Fig. 36 is a diagram illustrating the mesa-structure.
Fig. 37 is a diagram showing the process of forming the light source in embodiment 13.

### Best Mode for Carry Out the Invention

### Embodiment 1

A light source 200 for image writing apparatus in the invention is applied as a light source to the color laser printer (which is called a printer hereinafter) 100 shown in Fig. 1, like the conventional way.

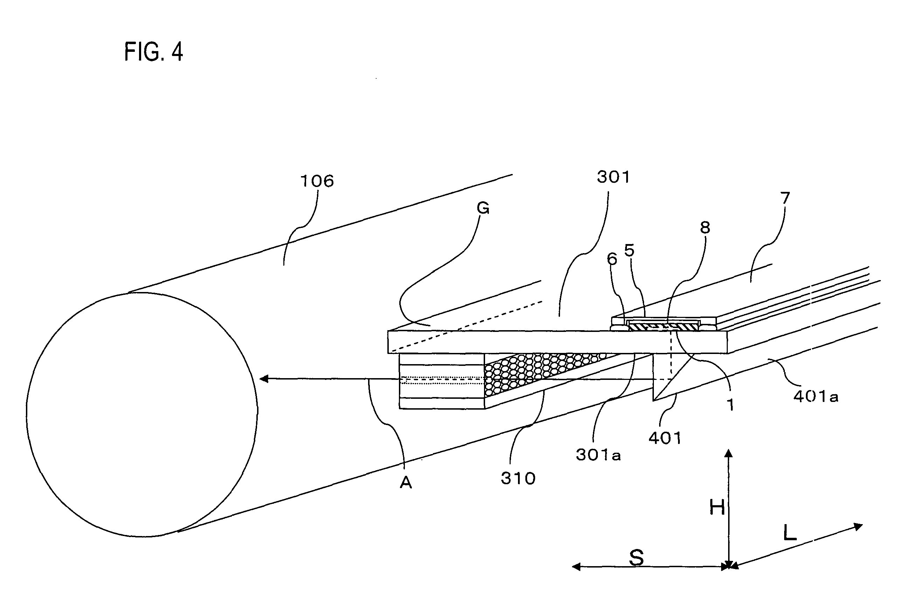

The light source 200 in this embodiment is composed of a transparent substrate 301 and a light transmitting means 310 that are extended to the main scanning direction as shown in Fig. 4. On one surface of the transparent substrate 301, a row composed of a plurality of light emitting elements 8 is formed in the long side direction of the transparent substrate 301 by means of a following method.

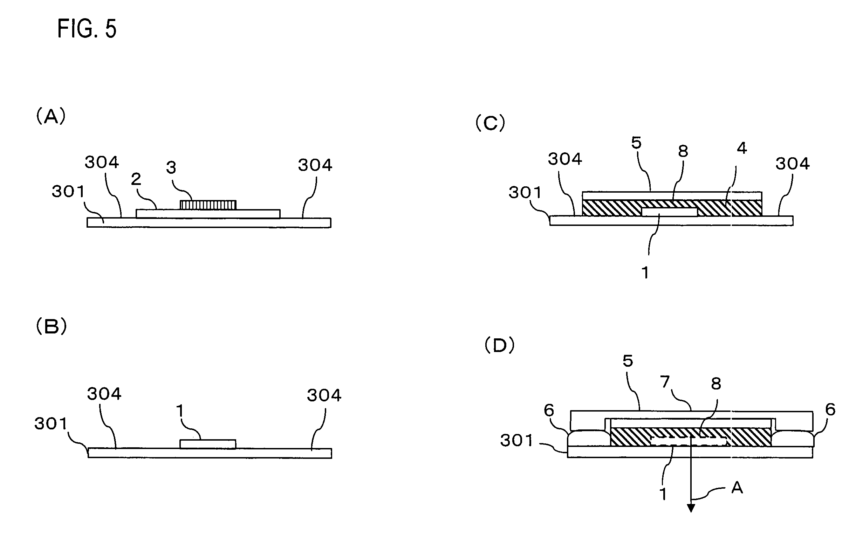

First, a transparent electrode layer 2 like ITO (Indium Tin Oxide) is applied on the whole surface of the transparent substrate 301, as shown in Fig. 5(A). And a shading film 3 masks a section of the transparent electrode layer 2, the section on which a transparent electrode element 1 is formed as an anode. The formed transparent electrode layer 2 is subjected to the photolithography, such as the exposure, the development, and the etching. After the photolithography, the other sections without the masking are removed from the transparent substrate 301, as shown in Fig. 5(B). And each masked section becomes the transparent electrode element 1. A plurality of sections on the transparent substrate 301 are masked at fixed intervals in the longitudinal direction, and thereby a row of the transparent electrode elements 1 is formed in the longitudinal direction.

In the next step, an organic EL (Electro Luminescence) is applied on the the whole surface of the transparent substrate 301, the surface on which the transparent electrode elements 1 are formed, as shown in Fig. 5(C), which forms an organic EL layer 4. On the surface of the organic EL layer 4, the metal to be a metal electrode layer 5 is applied as the common electrode. The organic EL layer 4, which is sandwiched between the metal electrode layer 5 and the transparent electrode element 1, becomes a light emitting element 8.

Besides, in order to protect the organic EL layer 4 from a physical impact or the moisture, the organic EL layer 4 is subjected to the sealing. As shown in Fig. 5(D), the sealing is the processing that an adhesive resin 6 like epoxy resins including the glass filler is applied on a sealing section 304 and the metal electrode layer 5 and the resin 6 are sealed by the sealing glass 7. The light emitting element 8 thus formed emits a ray of light A in the direction perpendicular to the transparent substrate 301, and the ray A passes through the transparent electrode element 1 and is discharged from the transparent substrate 301, as shown in Fig. 5(D).

The transparent substrate 301 is disposed so that the surface G formed by the long side direction L and the height direction H of the transparent substrate 301 faces a photosensitive drum 106, as shown in Fig. 4.

And a prism 401 extended to the main scanning direction is disposed on a surface (which is called a light emitting surface 301a hereinafter) opposite to the surface on which the light emitting elements are formed, and the disposed position corresponds to the row of the light emitting elements. Accordingly, the ray A emitted from the light emitting element 8 passes through both the transparent electrode element 1 and the transparent substrate 301, and comes into the prism 401 from the light emitting surface 301a.

As shown in Fig. 4, one surface making a right angle of the orthogonal prism is disposed on the transparent substrate 301. The ray A incident from the surface turns the direction by a slanting surface 401a and is discharged from another surface making the right angle of the orthogonal prism. Accordingly, the advancing direction of the ray A converts the direction parallel to the transparent substrate 301 (the normal direction of the photosensitive drum 106).

The light transmitting means 310 is disposed between the prism 401 and the photosensitive drum 106, so as to form a latent image on the photo sensitive drum 106 by the ray A emitted from the prism 401. In this embodiment, the light transmitting means 310 is supported by the transparent substrate 301.

The light transmitting means 310 is provided with a lens alley binding a plurality of optical lens like a fiber lens 313, a rod lens, or a micro lens. The optical lens used to the lens alley may be an image transmitting type or a type of transmission for the light intensity.

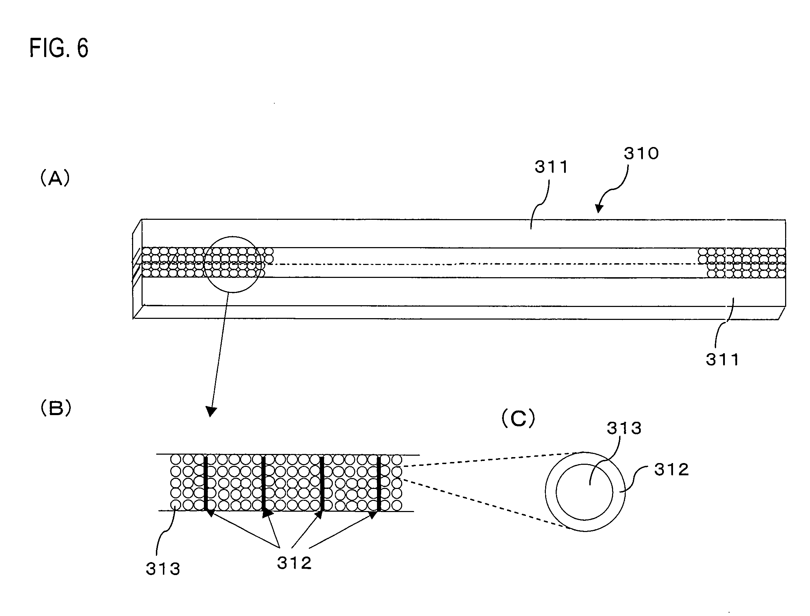

As shown in Fig. 6A and 6B, the fiber lens alley is disposed within a space surrounded by two base frames 311 and a light absorbing layer 312 so that each axis of the fiber lenses may face to the normal direction of the light sensitive drum 106. The gaps in the space in which the fiber lens alleys are disposed are filled with opaque resins.

The light absorbing layer 312 prevents the crosstalk between the fiber lenses 313. To prevent the crosstalk, instead of providing the light absorbing layer between the two base frames 311, the opaque resins to be the light absorbing layer 312 may be applied on the circumference of each fiber lens 313. In addition, the crosstalk can be prevented by using both the light absorbing layer 312 provided between the base frames 311 and the light absorbing layer 312 applied on the circumference of the fiber lens 312.

The ray A of which advancing direction is converted by the prism 401 passes through the light transmitting means 310 and illuminates the photosensitive drum 106, with the result that the latent image is formed.

As described above, the light source 200 is provided with the prism 401 as a converting means for changing the advancing direction of the ray A, and thereby the ray A emitted from the light emitting element 8 can illuminate the photosensitive drum 106 without facing the light emitting surface 301a of the transparent substrate 301 to the photosensitive drum like the conventional way.

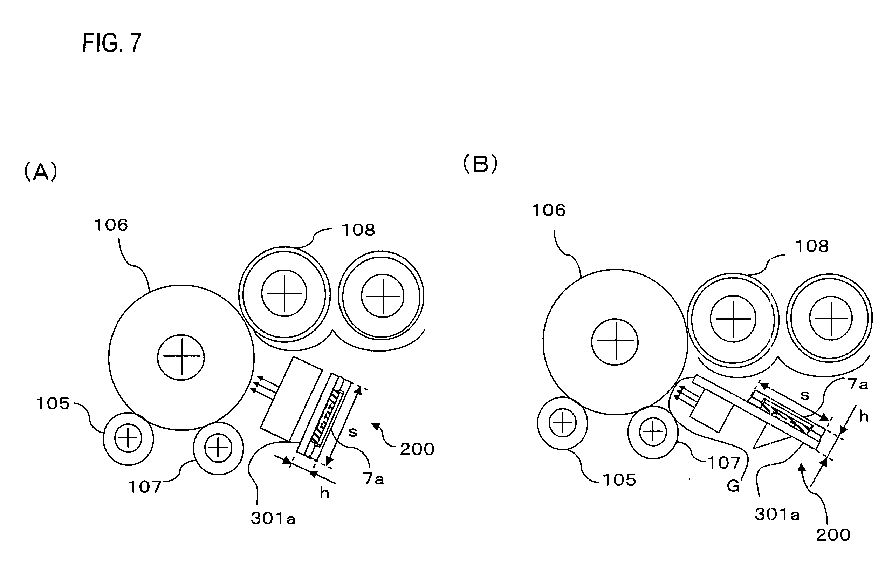

Fig. 7A shows a sectional view of the writing system 110, wherein a height h between the light emitting surface 301a and the top of the sealing glass 7a is shorter than a shorter side s of the transparent substrate 301, and the shorter side s of the transparent substrate 301 is disposed so as to be parallel with the sub-scanning direction while the light emitting surface 301a of the transparent substrate 301 is disposed so as to face to the photosensitive drum 106 in the same as conventional way. And Fig. 7(B) shows a sectional view of the writing system 110, wherein the surface G formed by both the long side direction L and the height direction H of the transparent substrate 301 is disposed so as to face to the photosensitive drum 106 like Fig. 4. As shown in Fig. 7 (B), the sub scanning direction of the light source 200 gets shorter by disposing the surface G so as to face the photosensitive drum 106. Accordingly, it is possible to carry out the writing system 110 with the shorter sub scanning direction.

If the sub scanning direction of the light source 200 gets shorter, the writing system 110 shown in Fig. 2 has the short sub scanning direction. Thereby the pitch of each photosensitive drum becomes narrow, so that the size of the printer 100 can be downsized.

In addition, the prism 401 as the converting means in the above description converts the advancing direction of the ray A in 90 degree as shown in Fig. 4, but the degree to convert the advancing direction is changeable freely by adjusting the degree of the slanting surface 401a.

Therefore, the layout of the assemblies inside the printer 100 can be designed according to the downsizing of the printer and the facilities of the printer production rather than the advancing direction of the ray A.

Besides, the above embodiment is explained based on that the prism 401 is used to the converting means. But the converting means may be a unit to convert the advancing direction of the ray A emitted from the light emitting element 8, and the shape or material of the converting means is not limited in particular.

### Embodiment 2

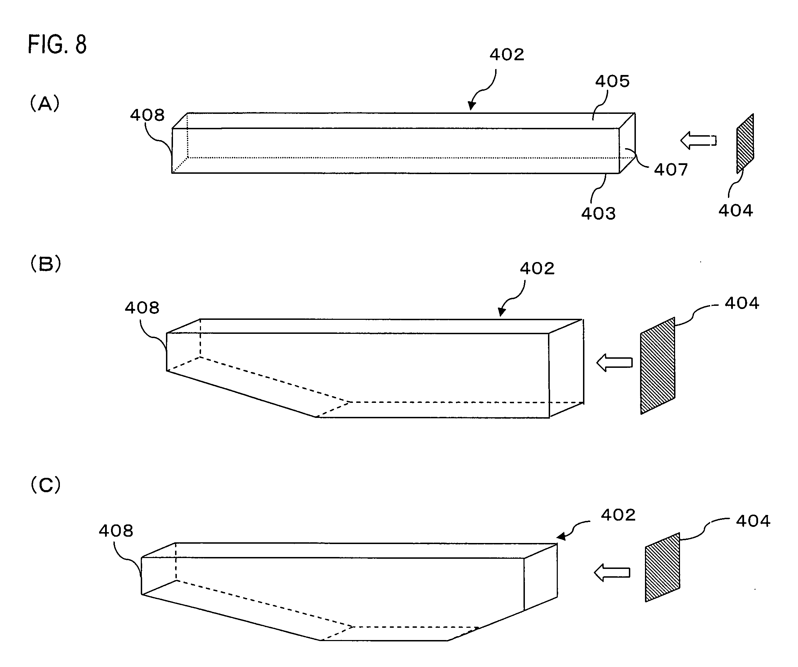

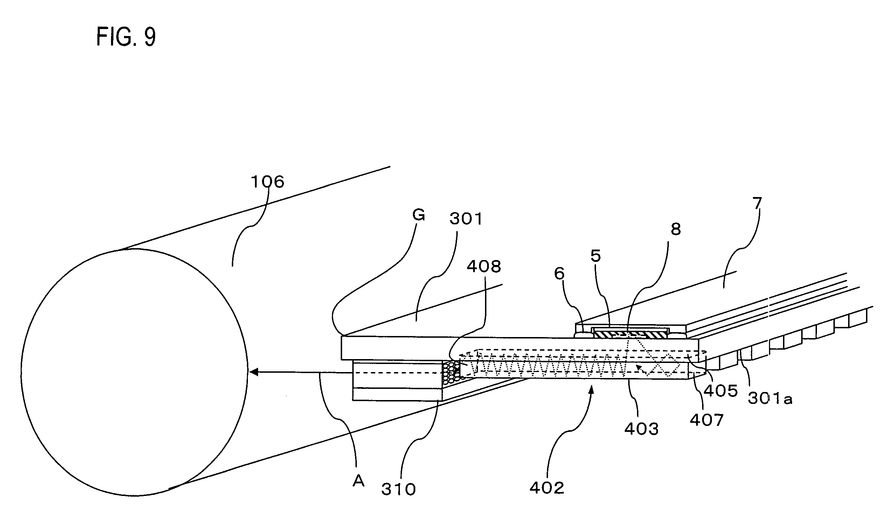

The converting means except for the prism 401 may be a light guide 402 as shown in Fig. 8, and the light guide 402 is made of a transparent material with higher refractive index than the air and the transparent substrate 301. As shown in Fig. 8A, a reflection material 404 made of a material without the transparency such as a metal is layered over an surface 407 opposite to an emitting surface 408 from which the ray A incident to the light guide 402 is emitted. Each light guide 402 is disposed on the light emitting surface 301a so as to contact an upper surface 405 with an opposite position to the transparent electrode element 1, as shown in Fig. 9.

As described in Embodiment 1, the light emitting element 8 emits the ray A downward (the light guide 402 side) in Fig. 9. Accordingly, the ray of light emitted from the light emitting element 8 passes through the transparent electrode element 1 and the transparent substrate 301, and comes into the light guide 402 through the upper surface 405 of the light guide 402. Besides, in order to reduce the occurrence of the crosstalk as much as possible when the ray A passes through the transparent substrate 301, the transparent substrate 301 should be thin.

As described above, the reflection material 404 is layered over the surface 407, and the refractive index of the light guide 402 is higher than the air and the transparent substrate 301. Therefore, the ray A incident into the light guide 402 through the upper surface 405 repeats the total reflection in the light guide 402, and then is emitted from the emitting surface 408.

In result, the advancing direction of the ray A converts from the downward direction to the left side direction by passing through the light guide 402, that is to say, the direction is converted with 90 degree.

Besides, the ray A emitted from the emitting surface 408 of the light guide 402 passes through the light transmitting means 310 and illuminates the photosensitive drum 106, whereby the latent image is formed, like embodiment 1.

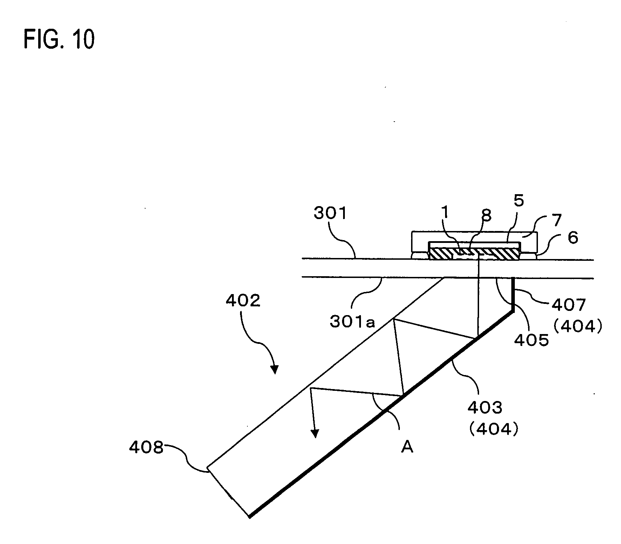

In addition, the above explanation refers to the case that the advancing direction of the ray of light is converted with 90 degree by using the light guide 402 as shown in Fig. 9. However, the advancing direction of the ray A is changeable freely by adjusting the longitudinal direction of the light guide 402 to any direction of the ray A to be emitted, as shown in Fig. 10.

Moreover, in such case that the above-mentioned light guide is used as the converting means, the section area of light emitted from the light emitting surface 408 has the same size as the light emitting surface 408 regardless of the size of luminous area of the light emitting element 8. Accordingly, forming the light emitting element 8 with a large light emitting surface on the transparent substrate 301 can increase the luminous flux density of the light emitted from the emitting surface 408.

Therefore, the light source 200 has a short sub scanning direction and outputs the light with higher luminous flux density by means of the light guide 402 as the converting means. Besides, the shape of the light guide 402 is not need to be a rectangular parallelepiped shown in Fig. 8A, but may be a pentagon prism or a hexagon prism shown in Fig. 8B or Fig. 8C.

### Embodiment 3

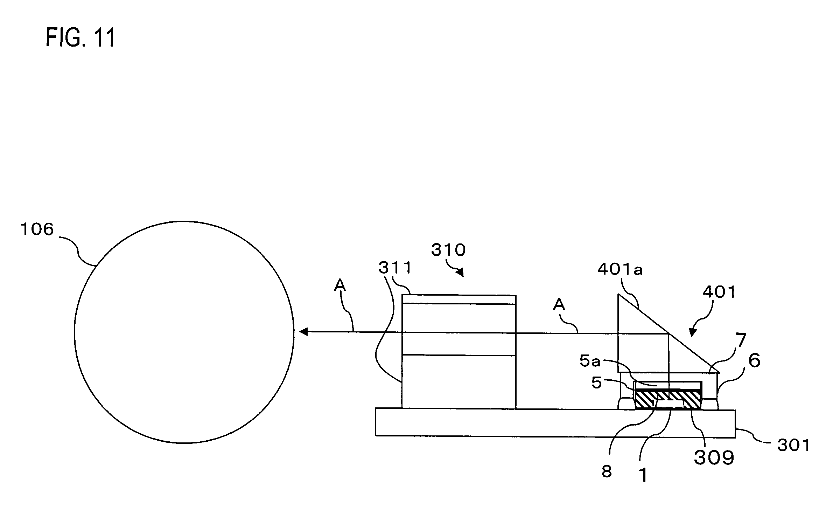

Embodiments 1 and 2 explains about the configuration that the prism 401 or the light guide 402 is disposed on the light emitting surface 301a of the transparent substrate 301. Additionally, the prism 401 or the light guide 402 may be disposed on the same surface that the light emitting surface 8 is formed, as shown in Fig 11 to Fig. 13.

That is to say, the prism 401 is disposed on the sealing glass 7 so as to emit the ray A emitted from the light emitting element 8 in the opposite direction to that described in Embodiments 1 and 2, and to lead the ray A into the prism 401 though the sealing glass 7.

However, when the light source 200 is formed as described in Embodiment 1, an opaque metal electrode layer 5 is formed on the upper side of the light emitting element 8 and the ray A cannot be emitted to the sealing glass 7. The cathode must use the material with lower work function than the transparent electrode element 1 to be the anode in order to improve the luminous efficiency of the organic EL, whereby the opaque metal electrode layer 5 is applied to the cathode.

The thickness of the metal electrode layer 5 should be a specific value (approximate 100Å) permeable to the light so as to emit the ray A from the side of the sealing glass 7. And in order that the electric current flows uniformly over the thin metal electrode layer 5, an electrode layer 5a made of a transparent material should be formed on the metal electrode layer 5.

According to such configuration, the ray A can be emitted to the upward direction in Fig. 11, and simultaneously, also be emitted to the downward direction. To prevent the downward emission, a reflection plate 309 should be provided between the transparent substrate 301 and the transparent electrode element 1.

Additionally, like Embodiment 1, the organic EL layer 4, the metal electrode layer 5 and the electrode layer 5a should be covered by the resin 6 and the sealing glass 7 in order to protect the organic EL layer 4 from the physical impact and the moisture.

By reducing the thickness of the metal electrode layer 5, the ray A emitted from the light emitting element 8 is emitted from the sealing glass 7, and incident into the prism 401 provided on the sealing glass 7.

After the ray A incident into the prism 401 changes the advancing direction by being reflected on the slanting surface 401a, the ray A is emitted from the prism 401, like Embodiment 1.

As described above, when the prism 401 and the light emitting element 8 are provided on the same surface of the transparent substrate, the light transmitting means is also provided on the same surface on which the light emitting element 8 is formed. The prism 401 and the light transmitting means 310 are disposed on the same surface on which the light emitting element 8 is formed in such way, and the transparent substrate 301 is not provided with anything on the surface opposite to the surface on which the light emitting surface element 8 is formed. This makes it easy to handle the light source 200.

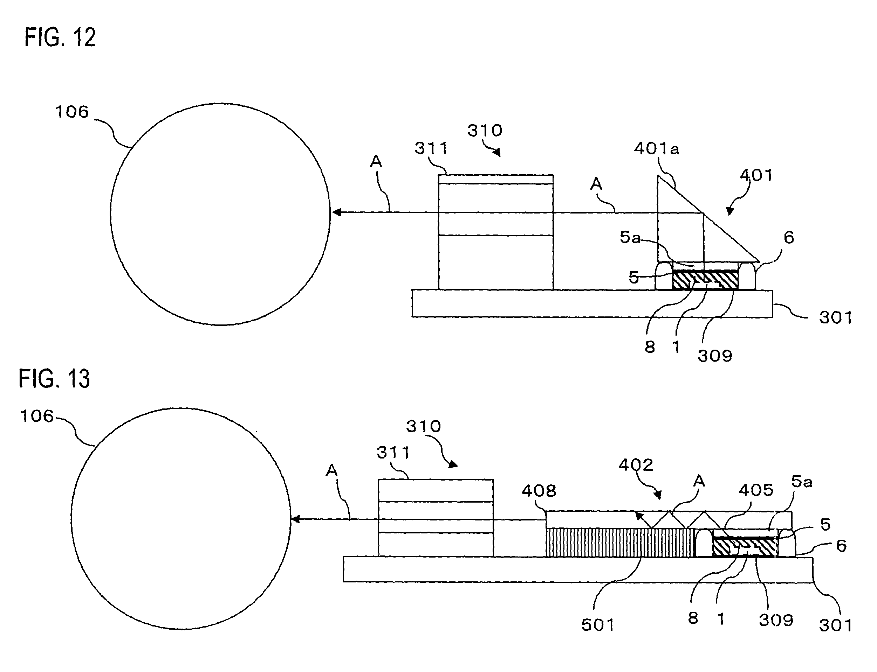

Besides, instead of disposing the prism 401 on the sealing glass 7 as above, the prism 401 or the light guide 402 may be disposed on the electrode layer 5a and the resin 6 as shown in Fig. 12 and Fig. 13. In such case, the prism 401 or the light guide 402 involves the function as the sealing glass 7.

### Embodiment 4

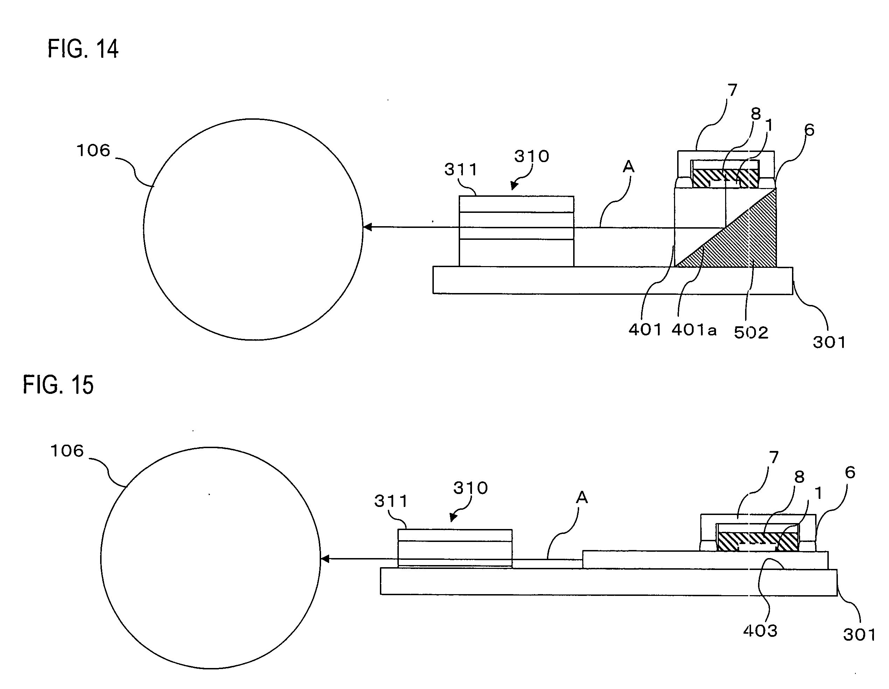

The prism 401 or the light guide 402 may be disposed between the transparent substrate 301 and the light emitting element 8, as shown in Fig. 14 and Fig. 15.

When the prism 401 is disposed on the transparent substrate 301 as shown in Fig. 14, a support stand 502 in the shape of a triangle prism, which is made of the material with the lower refractive index than the prism 401 or of the opaque material, should be disposed on the transparent substrate 301 to support the prism 401. And the prism 401 is placed on the support stand 502 so that the slanting surface 401a of the prism may be contacted with the slanting side of the support stand 502.

By means of the same way in Embodiment 1 to form the light emitting element 8 on the transparent substrate 301, the light emitting element 8 is formed on the prism 401. And the light transmitting means 310 is disposed on the same surface of the transparent substrate 301 that the prism 401 is disposed.

As shown in Fig. 14, after the ray A emitted from the light emitting element 8 comes into the prism 401 through the transparent electrode element 1, the ray A changes the advancing direction by reflecting the ray A on the slanting surface 401a. The reflected ray A forms the latent image on the photosensitive drum 106 through the light transmitting means 310.

And as shown in Fig. 15, the light guide 402 instead of the prism 401 may be disposed between the transparent substrate 301 and the light emitting element 8 so that a lower surface 403 of the light guide 402 may face to the transparent substrate 301. In such case, the reflection material 404 must be layered over the lower surface 403 of the light guide so as not to emit light from the lower surface 403.

The light guide 402 is provided with the light emitting element 8 thereon in the same way of forming the prism 401 thereon. The ray A emitted from the light emitting element 8 is emitted from the emitting surface 408 after repeating the total reflection within the light guide 402 like Embodiment 2. The emitted ray A forms the latent image on the photosensitive drum 106 through the light transmitting means 310.

As shown in Fig. 15, the ray A emitted from the light emitting element 8 is incident into the light guide 402 without passing through the transparent substrate 301. Therefore, there is a merit that the crosstalk in the transparent substrate 301 will not occur in the writing system applying the configuration shown in Fig. 15, although the crosstalk in the transparent substrate 301 occurs under the configuration shown in Fig. 9.

### Embodiment 5

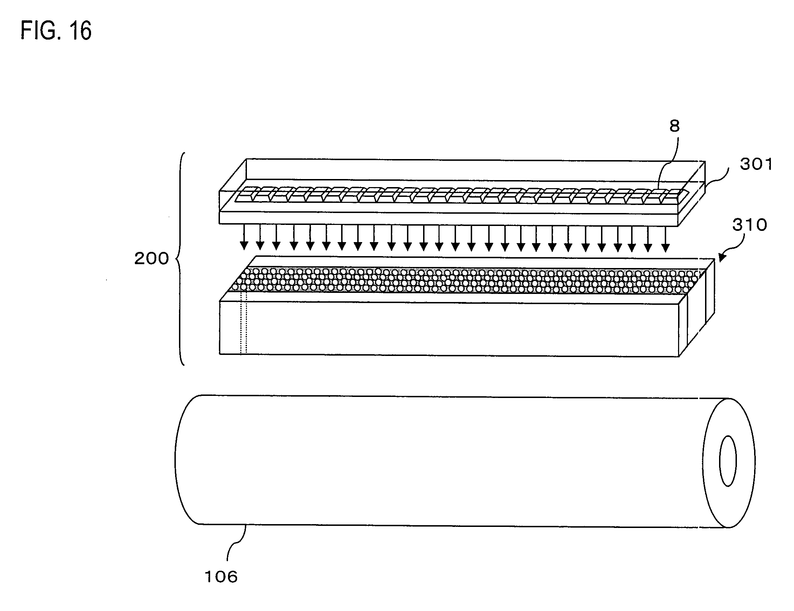

The light source in this embodiment is provided with the transparent substrate 301 and the light transmitting means 301 extended to the main scanning direction as shown in Fig. 16. The transparent substrate 301 and the light transmitting means 310 are supported respectively by a housing of the printer 100, or either of the transparent substrate 301 or the light transmitting means 310 is supported by the housing, and both the transparent substrate 301 and the light transmitting means 310 are fixed to the printer 100 by being connected by a spacer or the like not illustrated in the drawings.

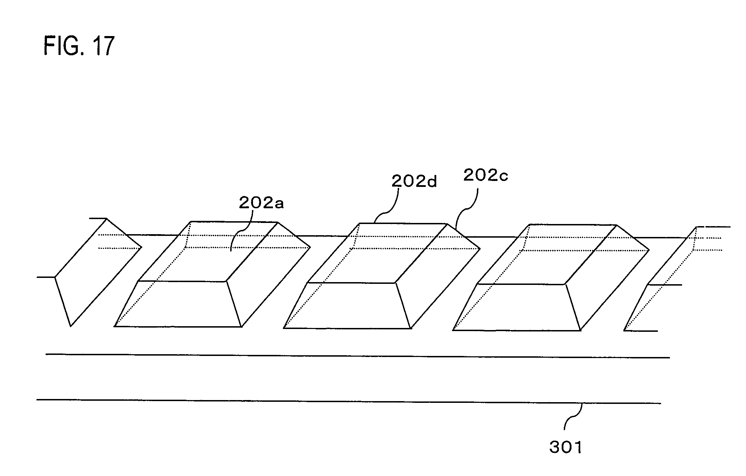

The transparent substrate 301 is provided with a number of small projections 202d with the mesa structure of the frustum as shown in Fig. 17 in the main scanning direction at fixed intervals. The transparent substrate 301 and the small projections 202d are formed in one piece. For instance, when the light source 200 can print out an image with 2400 dpi, the distance between the small projections 202d is about 10 µ*m*.

The respective small projections 202d may be formed on the transparent substrate 301 to be the substrate according to a following etching processing, or by embossing the resin, or may be formed with the transparent substrate 301 in one piece by the injection molding.

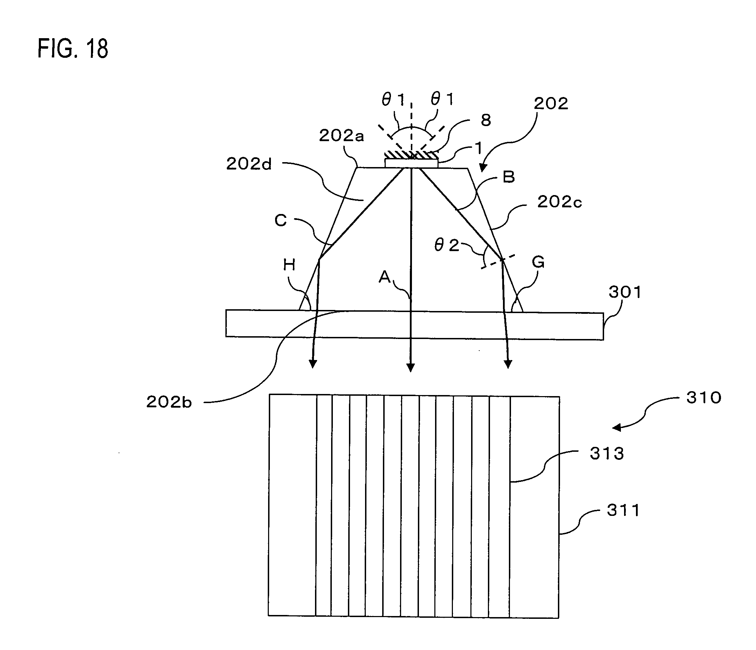

The shape of the small projection 202d may not be the frustum, but may be a shape wherein angles G and H, each angle formed by the transparent substrate 301 and a side surface 202c of the small projection 202d as shown in Fig. 18, make an acute angle, that is, the shape may apply a frustum, a triangular frustum, a pentagonal frustum, or a polygonal frustum. The material of the small projection 202d is to be permeable and preferably have the same refractive index as the light emitting element 8 of the light source 200. Besides, this embodiment is based on the organic EL (Electro Luminescence) with the refractive index, about 1.7, as the light emitting element 8, therefore, the material of the projection 202d in this embodiment is preferable to be the refractive index of about 1.7.

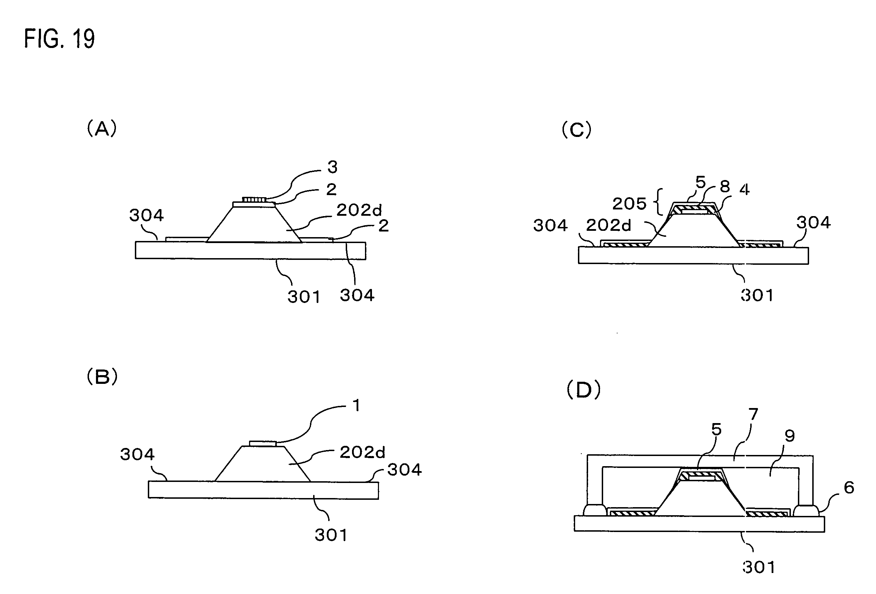

The light emitting element 8 shown in Fig. 19(C) is formed on an upper surface 202a of each small projection 202d according to the method as mentioned hereinafter.

On a whole upper surface of the transparent substrate 301 on which the small projections 202d are disposed, the transparent electrode layer 2 is applied as shown in Fig. 19(A). Next, a position which is on a center of the upper surface 202a of each small projection 202d, is masked by a shading film 3. And the transparent electrode layer 2 is subjected to the photolithography like the exposure, the development, and the etching. After the photolithography, the transparent electrode layer 2 is removed from the parts on which the shading film was not laminated, as shown in Fig. 19(B), and the masked parts becomes the transparent electrode elements 1.

Subsequently, the organic EL layer 4 is applied on the whole surface of the transparent substrate 301 on which the transparent electrode elements 1 are formed as shown in Fig. 19(C), and on the organic EL layer 4 the metal electrode layer 5 is applied as the common electrode. The part of the organic EL layer 4 sandwiched between the metal electrode layer 5 and the transparent electrode element 1 becomes the light emitting element 8.

To protect the organic EL layer 4 from the physical impact and the moisture, the resin 6 is applied on the sealing section 304, and the sealing glass 7 is applied on the rear surface of transparent substrate 301 on which the transparent electrode elements 1, the organic EL layer 4, and the metal electrode layer 5 are formed, as shown in Fig. 19(D). Besides, a space 9 surrounded by the metal electrode layer 5, the resin 6, and the sealing glass 7 may be under vacuum or be filled with nitrogen.

Under the above-mentioned configuration, when a predetermined voltage is impressed between the transparent electrode element 1 and the metal electrode layer 5 of the light source 200, the light emitting element 8 emits the light. The rays A, B and C thus emitted from the light emitting element 8 come from the upper surface 202a of the small projection 202d into the small projection 202d through the transparent electrode element 1 as shown in Fig. 18.

Of the rays A, B and C which come into the small projection 202d, the ray A of which incident angle θ1 on the upper surface 202a is small, that is, the advancing direction of the ray A is the same as or approximate to the axis direction of the fiber lens 313. Accordingly, the ray does not reflect within the small projection 202d but emits from the bottom 202b of the small projection 202d into the transparent substrate 301. On the other hand, the rays B and C, of which incident angles θ1 are large, are incident from the upper surface 202a, and reach the side 202c of the small projection 202d.

Since the refractive index of the small projection 202d is 1.7 that is larger than the space 9 under vacuum or filled with the nitrogen, and the angles *∠G* and *∠H* are acute angles as shown in Fig. 18 as described above, an incident angle θ2 that the rays B and C with the large incident angle θ1 forms on the side 202c of the small projection 202d becomes large. In result, it is likely that the ray with large incident angle θ1 like the rays B and C performs the total reflection on the side 202c. By the total reflection, the rays B and C are imparted with the directivity close to the axis direction of the fiber lens 303, and then emitted from the bottom 202b to the transparent substrate 301.

Therefore, after the ray of light with the large incident angle θ1 passes through the small projection 202d, the advancing direction of the light is steered to the same direction as the axis direction of the fiber lens 313. That is to say, by transmitting the light through the small projection 202d, it is possible to increase the volume of light by converging light within the scope of the angle aperture of the fiber lens 303.

As the transparent substrate 301 shown in Fig. 16, another surface (front surface) opposite to the surface on which the small projections 202d are disposed is disposed so as to face to the photosensitive drum 106 sandwiching the light transmitting means 310. Accordingly, the light thus emitted from the bottom 202b of the small projection 202d passes through the transparent substrate 301, and comes into the light transmitting means 310.

Since the advancing directions of most of light reaching the light transmitting means 310 are steered to the same as the axis direction of each fiber lens 303 composing the light transmitting means 310, even if the angle aperture of the fiber lens 303 is small, each ray of light is led into the light transmitting means 310, and illuminates the photosensitive drum 106 through the light transmitting means 310.

When the light emitting elements 8 are formed on the transparent substrate 301 provided with the small projections 202d, the light transmission efficiency between the light emitting element 8 and the photo sensitive drum 106 could be improved about a four times as high as the configuration without the projections.

Due to the directivity means like the small projection 202d, it is not necessary to make the angle aperture of the fiber lens 303 large in order to improve the light transmission efficiency. Accordingly, the light transmitting means 310 can keep a long focal depth. This makes it possible to form a clear latent image on the photosensitive drum 106 with ease.

The above-mentioned etching is a dry etching for forming the mesa structure, for example.

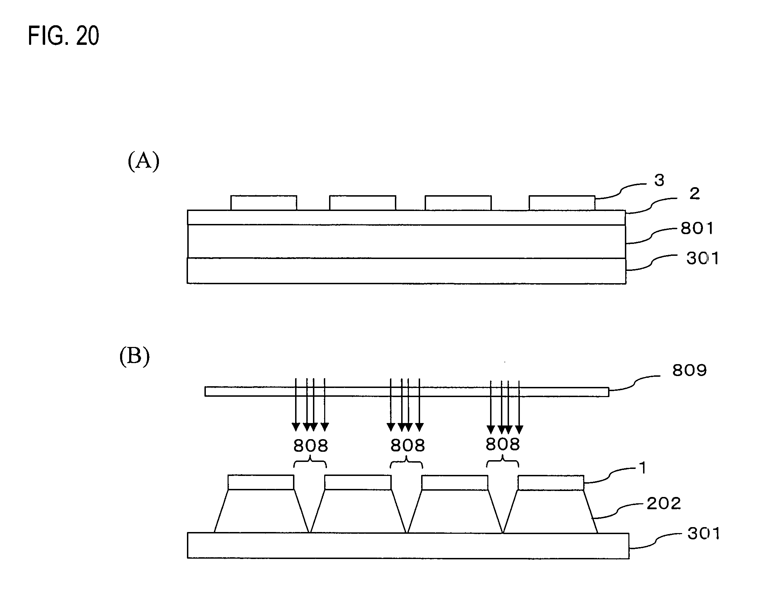

When the small projection 202d is formed by the dry etching, a material to be a directivity imparting layer 801 is applied or evaporated on the whole surface of the transparent substrate 301 as shown in Fig. 20A. The material of the directivity imparting layer 801 is the same as the small projection 202d. In the next step, the transparent electrode layer 2 is formed on the upper surface of the directivity imparting layer 801 by the coating or the evaporation. The positions to form the transparent electrode element 1 on the transparent electrode layer 2 are covered by the shading film 3

Regarding the transparent substrate 301 on which the transparent electrode layer 2 is formed as above, a reacting species is brought to a side forming section (sections 808) through a mask 809 for controlling the depth of the etching. The depth of the etching depends on the brought amount. Therefore, the mask 809 applies a metal mesh wherein each size of apertures is adjusted corresponding to the depth of the etching, for example. That is to say, some parts of the metal mesh corresponding to the deep etching part (the center of the section 808) have a large size of aperture to increase the brought amount of the reacting species, while the other parts corresponding to the shallow etching part (the end portions of the section 808) have a small size of aperture to reduce the brought amount of the reacting species.

The etching removes the sections filled with the reacting species from the transparent electrode layer 2 and the directivity imparting layer 801, so that a number of projections 202d in a shape of polygonal frustum can be formed on the transparent substrate together with the transparent electrode element 1, as shown in Fig. 20B.

As described above, both the directivity imparting layer 801 and the transparent electrode layer 2 are subjected to the etching simultaneously, with the result that it is possible to reduce the steps of producing the light source. And where the transparent electrode element 1 is formed separately from the directivity imparting means, the positioning for the masking is required. But such positioning becomes unnecessary by performing the etching simultaneously.

### Embodiment 6

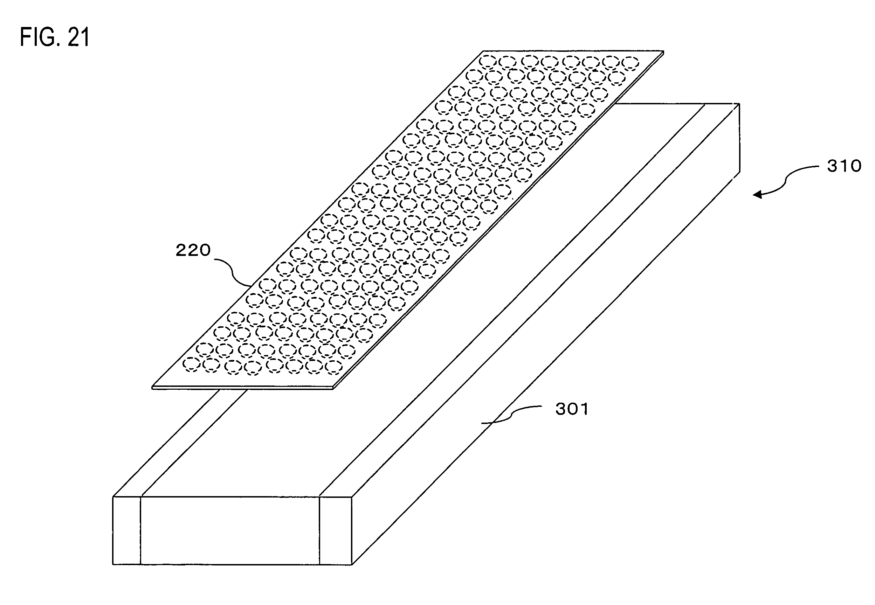

The above-mentioned directivity means may be configured by a beads sheet 220 of which projections are formed on a surface of the transparent substrate 301 extended to the main scanning direction by the injection molding, said surface facing to the light transmitting means 310, as shown in Fig. 21. In the case of using the beads sheet 220 as the directivity means, the light emitting elements 8 are formed on another surface of the beads sheet 220 opposite to the surface on which the projections are formed, according to the following method.

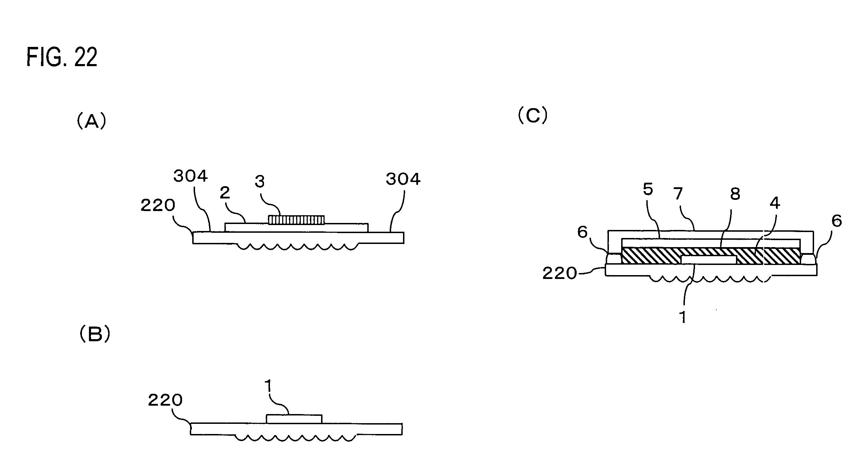

First, the transparent electrode layer 2 is applied on the whole surface of the beads sheet 220, which is opposite to the surface with the projections, as shown in Fig. 22(A). And then, a position on the transparent electrode layer 2, where the transparent electrode element 1 should be formed, is covered with the shading film 3, like Embodiment 5.

And the photolithography is performed, which forms the transparent electrode element 1 on the part masked by the photolithography, as shown in Fig. 22(B). After that, the organic EL layer 4 and the metal electrode layer 5 are formed in the same way as Embodiment 5. In result, the organic EL layer 4 sandwiched between the transparent electrode element 1 and the metal electrode layer 5 becomes the light emitting element 8. Besides, like Embodiment 5, for the purpose of protecting the organic EL layer 4 from the physical impact and the moisture, the resin 6 is applied on the sealing section 304, and the metal electrode layer 5 and the resin 6 are covered by the sealing glass 7.

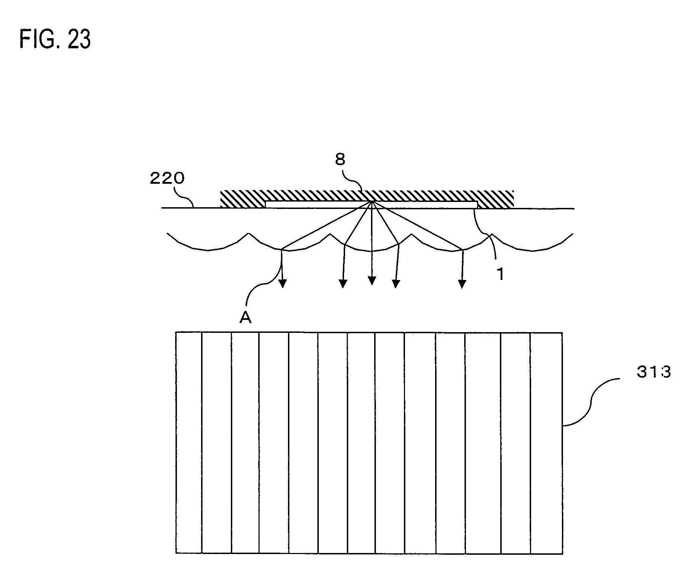

Under such configuration, the ray A emitted from the light emitting element 8 is incident into the beads sheet 220 through the transparent electrode element 1 as shown in Fig. 23. The beads sheet 220 is provided with the projections on the surface facing to the light transmitting means 310. There is a possibility that the ray A, at the time of going out from the beads sheet 220, has a smaller angle against the projection than when the ray A is emitted from the surface without projections. Therefore, the projections can reduce the leakage of the light emitted from the beads sheet 220, with the result that it is possible to increase the volume of emitted from the beads sheet 220 to the light transmitting means 310.

When the light is emitted from the beads sheet 220, the light is imparted with the directivity because of the difference of the refractive index between the beads sheet 220 and the outside. That is to say, the light turns the advancing direction to the axis direction of the fiber lens 303, and the light steers the advancing direction to the same direction as the axis direction of the fiber lens 303.

The beads sheet 220 used as the directivity means as described above can emit a large volume of light as well as can impart the directivity to the light. In result, when the light emitting elements 8 are formed on the beads sheet 220, the light transmission efficiency between the light emitting element 8 and the photosensitive drum 106 could be improved about a twice as high as the configuration without the projections.

Besides, the projection provided with the beads sheet 220 may be a shape that is able to impart the light with the directivity as well as emit larger volume of light from the beads sheet 220, such as a cone, a frustum of a cone, a dome, a triangular pyramid, a rectangular pyramid, and so on.

And the size of the projection of the beads sheet 220 is not limited in particular, but it is desirable to be smaller than the light emitting element 8. For instance, if the size of the projection is the same as the light emitting element 8, the assembling of the light source 200 requires a step of the positioning to correspond the projection to the light emitting element 8 so that the light from the light emitting element 8 might be discharged from one projection. But, as smaller the projection is in size, the number of the projections through which the light from each light emitting element passes becomes approximate to the number of the light emitting elements 8 without the positioning of the projection and the light emitting element 8. Therefore, it is possible to diminish the dispersion of the transmission efficiency of the light from each light emitting element 8 and the directivity to be imparted.

In addition, since the beads sheet 220 is provided with functions of both the directivity means and the transparent substrate 301 as described above, it is possible to omit the positioning step of the small projections 202d as described in Embodiment 1 from the assembling process of the light source provided with the beads sheet 220.

### Embodiment 7

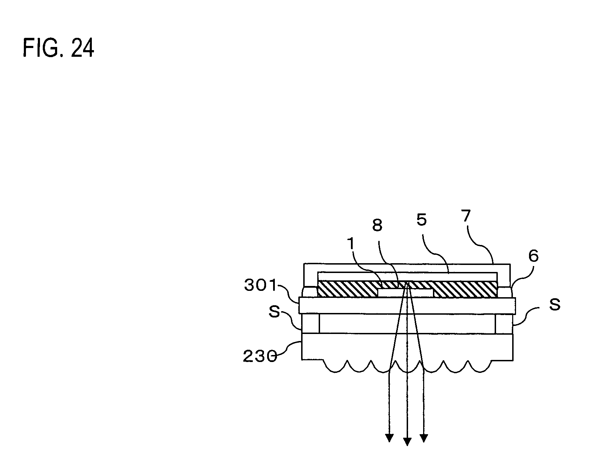

In Embodiment 7, instead of the beads sheet 220 with the projections provided to the transparent substrate 301 as the directivity means, a micro lens alley 230 may be disposed between the transparent substrate 301 and the light transmitting means 310 as the directivity means, as shown in Fig. 24.

The producing process for forming the light emitting element 8 on the transparent substrate 301 is the same as in Embodiment 6 except for a step that the light emitting element 8 is formed on the transparent substrate 301 without the projections.

The micro lens alley 230 to be used as the directivity means is produced by the injection molding or by irradiating the ultraviolet rays on the photosensitive glass.

The micro lens alley 230 is supported by the transparent substrate 301 through the spacer S as shown in Fig. 24, for example.

The light from the light emitting element 8 are incident to the micro lens alley 230 through the transparent substrate 301. And when the light is emitted from the micro lens alley 230, the advancing direction of the light is converted in the same way as emitting the light from the beads sheet 220. And most advancing directions of the light are converted to the same direction as the axis direction of the fiber lens 303.

Besides, the size of the micro lens is not limited in particular. But it is desirable to be smaller than the transparent electrode element 1 like the size of the projection of the beads sheet 220.

### Embodiment 8

The above embodiment relates to the configuration so as to improve the transmission efficiency of the light between the light emitting element 8 and the photosensitive drum 106 by changing the advancing direction of the light, and the illuminance on the photosensitive drum. The following explains about the configuration so as to improve the illuminance on the photosensitive drum by improving the luminous intensity of each light emitting element 8.

In order to improve the luminous intensity of each light emitting element 8, the respective light emitting elements 8 in this embodiment have a large luminous area. As described above, in order to print an image with high resolution, each light emitting element 8 must be disposed at a small interval in the main scanning direction. Accordingly, the length of the light emitting element 8 in the main scanning direction is limited.

However, regarding the sub-scanning direction, the length is not limited at all. Accordingly if the length of the light emitting element 8 is extended in the sub scanning direction, the size of the light emitting elements 8 can be enlarged. The light emitted from the light emitting element 8 extended in the sub scanning direction has a long section in the sub-scanning direction. In result, the latent image formed on the photosensitive drum 106 has pixels extended to the sub-scanning direction. In order to prevent the pixels from being extended to the sub-scanning direction, the length of the section of the light in the sub-scanning direction must be the same as the one in the main scanning direction before the light emitted from the light emitting element 8 reaches the photosensitive drum 106.

In this embodiment, the light guide 402 is used as a condensing means for condensing the light from the light emitting means 8 into the sub-scanning direction.

As described in Embodiment 2, the reflection material 404 not permeable to light is layered over the surface 407 opposite to the emitting surface 408 of the light guide 402.

The light guides 402 are disposed on the transparent substrate 301 in the main scanning direction at fixed intervals. The fixed intervals are the same as the intervals of pixels of the printing image. Besides, in order to avoid the crosstalk of the light incident to each light guide 402, the space between the light guides 402 may be formed as an air layer or filled with the material having the refractive index smaller than the light guide 402.

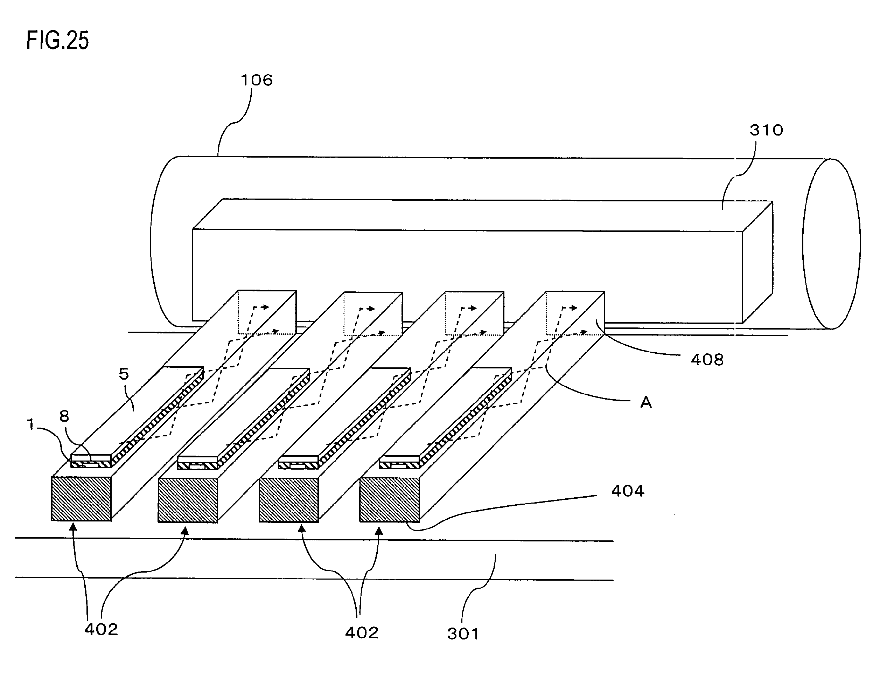

The light emitting elements 8 are formed on each light guide 402 in the same way as forming the light emitting element 8 on the small projection 202d in Embodiment 1. It is sure that the sealing section 304 is applied with the resin 6, and the metal electrode layer 6 and the resin 6 are covered with the sealing glass 7 in order to protect the organic EL layer 4 from the physical impact and the moisture, which is not shown in Fig. 25.

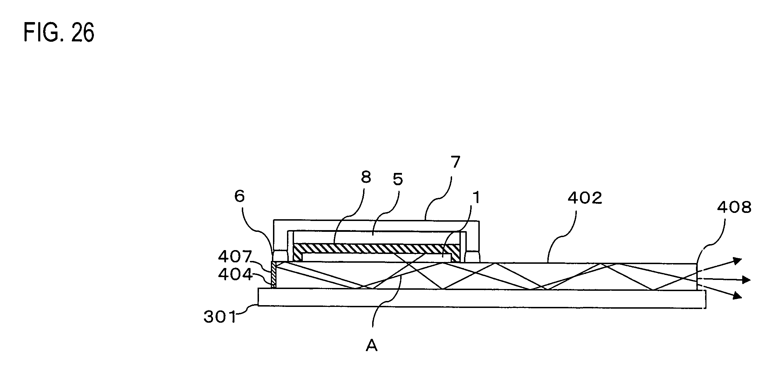

In a sectional view (Fig. 26) of Fig. 25, the ray A emitted from the light emitting element 8 is incident to the light guide 402 through the transparent electrode element 1. It is configured that the light guide 402 has the refractive index larger than the transparent substrate 301, a vacuum status, or the air, and the reflection material 404 is layered over the surface 407 of the light guide 402. The ray A incident to the light guide 402 is reflected within the light guide 402 repeatedly, and then the ray exits from the emitting surface 408. As the ray A emitted from the light emitting element 8 is emitted from the emitting surface 408, the section of the light emitted from the light emitting element 8 is the same size as the emitting surface 408.

Therefore, the section of the emitting surface 408 may be formed so as to have the same area as the area required to the pixels of the latent image formed on the photosensitive drum 106. In result, even if the luminous surface of the light emitting element 8 has any shape, the section of the light emitted from the emitting surface 408 is the same area as required.

Accordingly, the larger the luminous area of the light emitting element 8 becomes, the more the luminous flux density of the light emitted from the emitting surface 408 can increase. Since the length of the ray emitting element 8 in the sub scanning direction is not limited in particular as mentioned above, the light emitting element 8 may be formed on the light guide 402 so as to be long in the sub scanning direction. This makes it possible to obtain the high luminous flux density on the emitting surface 408. In addition, since the light are condensed in the sub scanning direction, it is possible to obtain on the emitting surface 408 the light with the high luminous flux density and with the same length both in the main scanning direction and the sub scanning direction.

The light source 200 provided with the light guide 402, wherein the light is emitted from the emitting surface 408, is provided with the light transmitting means 310 in front of the light emitting surface 408 as shown in Fig. 25. The light emitted from the emitting surface 408 illuminates the photosensitive drum 106 through the light transmitting means 310 in the same way as described in Embodiments 5 through 7.

Therefore, the condensing means makes it possible to obtain the light with high luminous flux density even in the light source 200 wherein the light emitting elements 8 are formed in the main scanning direction at short intervals. Therefore, the light source with the condensing means can form the latent image with the high resolution.

Additionally, the luminescence life of the light emitting element 8 does not become short in using the light guide 402 as the condensing means, because it is not necessary to apply a large electric field on the transparent electrode element 1 and the metal electrode layer 5 in order to obtain the light with the high luminous flux density as conventionally.

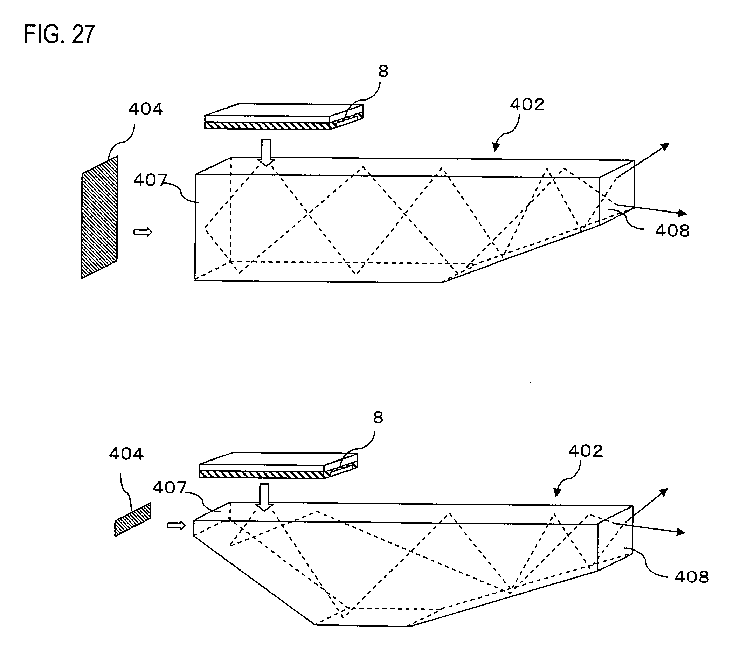

Moreover, the shape of the light guide 402 is not limited to a rectangular parallelepiped shown in Fig. 25. For instance, the shape may be a polygonal prism like a pentagonal prism and a hexagonal prism, or a shape with polygonal bottom and upper surface of frustum of a cone as shown in Fig.27.

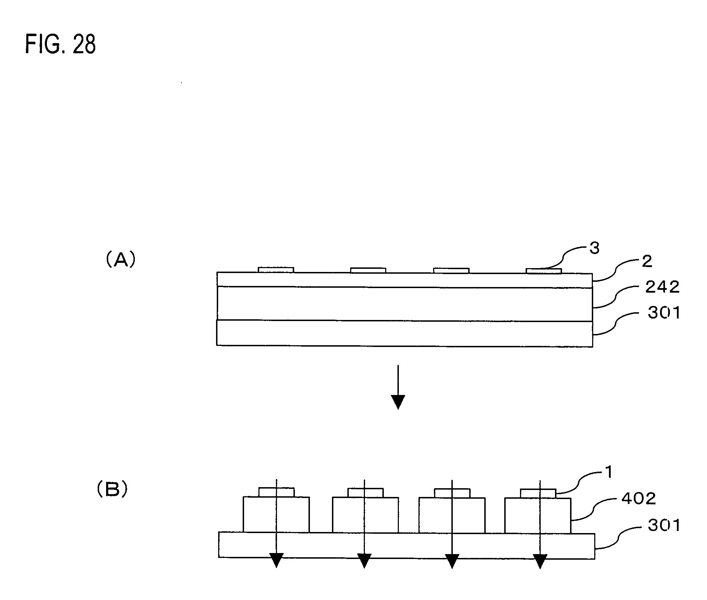

Besides, although the light guide 402 may be produced by the injection molding, it may be produced by the etching as follows. For instance, a material 242 to be the light guide 402 is applied on the transparent substrate 301, and then the transparent electrode layer 2 is applied thereon, as shown in Fig. 28(A). Next, the position to form the transparent electrode element 1 on the transparent electrode layer 2 is masked by the shading layer 3, and then the transparent electrode layer 2 and the material 242 are subjected to the etching. Hereupon, the transparent electrode element 1 and the light guide 402 are produced as shown in Fig. 28(B).

As described above, since the section area of the light emitted from the light emitting element 8 can be made to be the same size as the pixels of the latent image by the light guide 402, if the light guide 402 is disposed so that the emitting surface 408 be closer to the photosensitive drum 106, the light source 200 does not need to be provided with the transmitting means 310.

And if the emitting surface 408 is a convex surface such as the convex lens, the light through the emitting surface 408 is allowed to form an image on the photosensitive drum 106. It is nevertheless to say that it is not necessary to provide the light source with the light transmitting means if the emitting surface 408 is convex.

### Embodiment 9

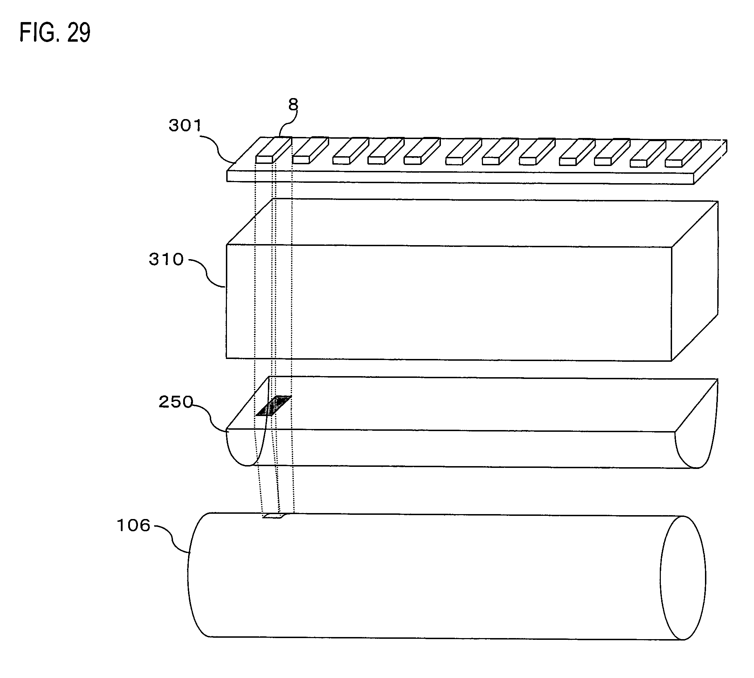

A convex cylindrical lens 250 may be applied to the condensing means, instead of the light guide 402. In such case, the cylindrical lens 250 may be disposed between the light transmitting means 310 and the photosensitive drum 106 so as to face the curved surface to the photosensitive drum 106 as shown in Fig. 29. The cylindrical lens 250 should be supported by the light transmitting means 310 through a spacer not shown in the drawing, or by a housing of the printer 100.

The light emitting element 8 may be formed on the transparent substrate 301 in the same way as Embodiment 6, but the light emitting element 8 in this embodiment is longer in the sub scanning direction than in the main scanning direction, which is different from embodiment 6. The length of the light transmitting element 8 is long in the sub scanning direction because the main scanning direction is limited as described in Embodiment 8. Besides, Fig. 29 does not show, but it is also a matter of course in this embodiment that the metal electrode layer 5 may be covered by the resin 6 and the sealing glass 7 in order to protect the organic EL layer 4.

As shown in Fig. 29, the light emitted from the light emitting element 8 is incident into the cylindrical lens 250 through the transparent substrate 301 and the light transmitting means 310. The light incident to the cylindrical lens 250 is narrowed down to the sub scanning direction when the light exits from the convex surface of the cylindrical lens. And the section of the light on the photosensitive drum has the same length both in the main scanning direction and the sub scanning direction.

If the cylindrical lens 250 is used as the condensing means, it is possible to freely change the length of the section of the light in the sub scanning direction on the photosensitive drum 106 by adjusting the radius of curvature or the refractive index of the cylindrical lens 250, or by adjusting the distance between the cylindrical lens 250 and the photosensitive drum 106.

Therefore, like Embodiment 8, if it is configured so that the length of the light emitting element 8 is as long as possible in the sub scanning direction, and the cylindrical lens 250 is adjusted in the radius of curvature and the refractive index, and the distance between the cylindrical lens 250 and the photosensitive drum 106 is adjusted, whereby it is possible to obtain the light with the high luminous flux density and with the length of the section that is the same as in the main scanning direction and in the sub scanning direction. However, if the light are condensed in the sub canning direction only, the focal length of light becomes short only in the sub scanning direction, and a difference occurs between the focal length of the sub scanning direction and the focal length of the main scanning direction. Accordingly, when the sub scanning direction of the light emitting element 8 is much longer than the main scanning direction, the focal length of the sub scanning direction has a large difference from the focal length of the main scanning direction. And then, it is not possible to obtain a clear latent image on the photosensitive drum 106.

Besides, the description in Embodiment 9 relates to the case where the convex cylindrical lens 250 is used as the condensing means. But, instead of the convex cylindrical lens 250, the micro lens ally 260 may be used as the condensing means.

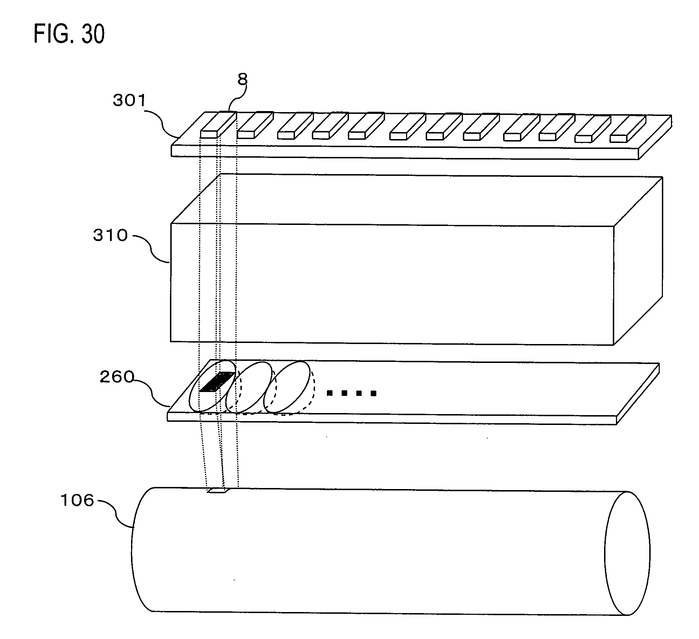

The micro lens ally 260 as the condensing means is formed as shown in Fig. 30 so that the micro lenses may be arranged in a line in the main scanning direction, the shape of each micro lens is a oval of which long axis is in parallel with the sub scanning direction. The purpose of forming such oval is to narrow the light down to the sub scanning direction.

The cylindrical lens 250 or the micro lens alley 260 is disposed between the light transmitting means 310 and the photosensitive drum 106 in Fig. 29 and Fig. 30, however, the light transmitting means 310 may be disposed just above the cylindrical lens 250 or the micro lens alley 260.

In addition, if the light transmitting means 310 is composed of the image transmitting type of lens, the light transmitting means 310 may be disposed just above the cylindrical lens 250 or the micro lens ally 260.

### Embodiment 10

In Embodiments 5 through 9, respective layers are formed in the order, the transparent electrode element 1, the organic EL layer 4, and the metal electrode layer 5. Therefore, the light emitted from the light emitting element 8 is discharged to the side of the transparent substrate 301 as shown in Fig. 16.

But, the light source 200 may emit the light to another side opposite to the direction described in Embodiments 5 through 9, that is to say, the light may be emitted upwardly in Fig. 16.

Since the light emitting element 8 is provided with the opaque metal electrode layer 5 on the upper side as described in Embodiment 5 through 9, the light cannot be emitted upwardly. As described in Embodiment 4, in order to improve the light emitting efficiency of the organic EL, the cathode must use the material of which work function is lower than the transparent electrode element 1 to be the anode, and the opaque metal electrode layer 5 is used as the cathode.

Now, in order to emit the light upwardly, the metal electrode layer 5 is formed so as to have a thickness (about 100Å) as far as the light is transmitted. Thereby, the light can be emitted upwardly. But, the light is allowed to be discarded downwardly, too. To avoid the light discharging downwardly, the reflection material 404 is provided between the transparent substrate 301 and the transparent electrode element 1.

Besides, like Embodiment 4, the electrode layer 5a is formed on the metal electrode layer 5 so as to flow the electric current uniformly on the thin metal electrode layer 5. And also in this embodiment, the organic EL layer 4, the metal electrode layer 5 and the electrode layer 5a are covered with the resin 6 and the sealing glass 7 for the protection of the organic EL layer 4.

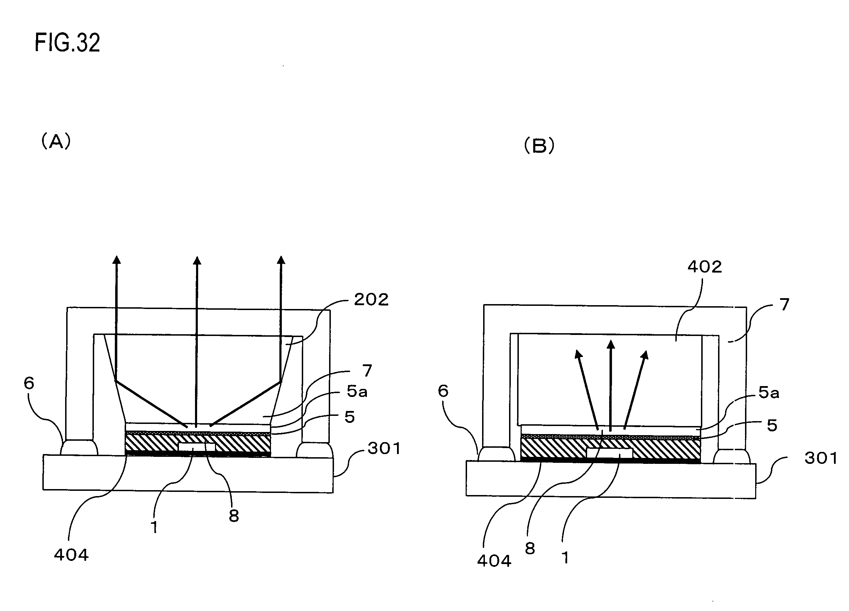

As described above, the small projection 202d or the light guide 402 is formed on the electrode layer 5a, and the sealing glass 7 covers the light emitting element 8 and the small projection 202d, or the light guide 402, which are shown in Fig. 32A and Fig. 32B.

### Embodiment 11

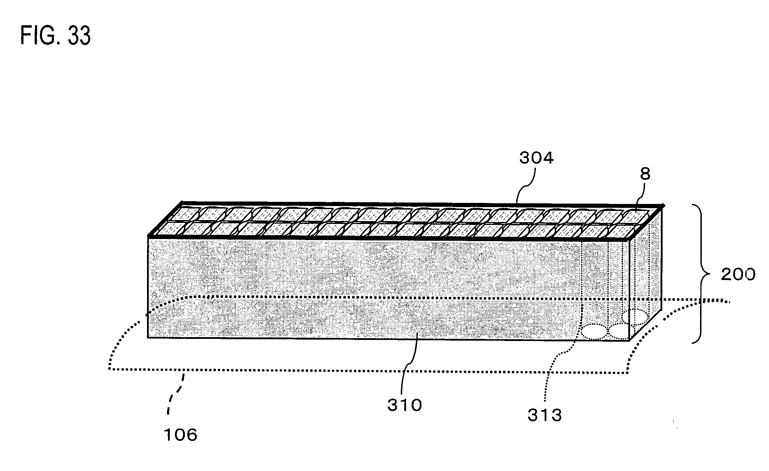

The light source 200 in this embodiment as shown in Fig. 33 is composed of the light transmitting means 310 and the light emitting element 8. The light transmitting means 310 is for exactly forming the latent image on the photosensitive drum 106 as described above. The light emitting element 8 is configured by a flat luminous layer. The organic electro luminescence (which is called the organic EL) is applied to an example of the flat luminous layer.

Additionally, one of the light emitting elements 8 is provided on the light transmitting means 310 so as to correspond to one of the fiber lenses 313 (which is called a single lens 313) composing the fiber lens alley shown in Fig. 6A. The light from the light emitting element 8 illuminates the photosensitive drum 106 through the corresponding single lens 313, and then the latent image is formed thereon.

Next, the light emitting element 8 is formed direct on the light transmitting means 310, of which production method is described hereinafter.

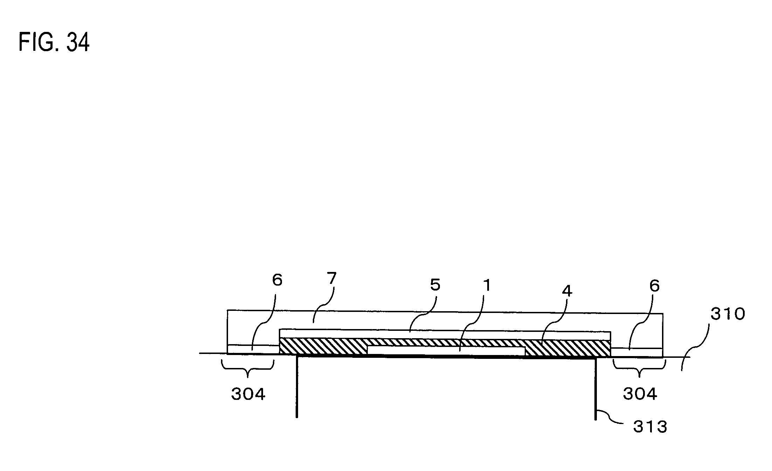

The transparent electrode layer 2, such as the ITO electrode to be the material of the transparent electrode element 1, is formed on whole opening surfaces (the upper surfaces of the single lens 313) of the light transmitting means 310 by the evaporation or the application as shown in Fig. 34. Thereby, the transparent electrode layer 2 is attached tightly to the light transmitting means 310 in optical.

And then, the upper section of each single lens 313 in this embodiment, from which the light transmitting means emits the ray of light, is masked with the shading film 3 regarding this section only. And the opening surface is subjected to the photolithography like the exposure and the development, or the etching, that is, the patterning. The patterning removes the transparent electrode layer 2 on the parts without masking, while the masked section becomes the transparent electrode element 1.

Next, the organic EL layer 4 is formed by applying the organic EL on the whole surface of the opening surface on which the transparent electrode element 1 is formed, and then, the metal electrode layer 5 is formed on the upper surface on the organic EL layer 4 as a common electrode. The organic EL layer 4 sandwiched between the transparent electrode element 1 and the metal electrode layer 5 becomes the light emitting element.

Besides, the light emitting element 8 is subjected to the sealing as follows. The resin 6 is applied on the sealing section 304 surrounding the single lens 313, and in the last place the metal electrode layer 5 on the opening surface and the resin 6 applied on the periphery thereof are covered with the approximately U-shaped sealing glass 7. In result, the light source 200 is completed.

According to the above steps, the light source 200 is formed combining the light transmitting means 310 with the light emitting element 8 in optical one piece. In thus formed light source 200, the organic EL layer 4 between the transparent electrode element 1 and the metal electrode layer 5 emits the ray when the electric field is applied on the transparent electrode element 1 and the electrode layer 5.

Since the light emitting element 8 using the organic EL is formed direct on the light transmitting means 310, the light emitted from the light emitting element 8 is transmitted direct to the light transmitting means 310 without passing through the low refractive index layer with the low directivity. Accordingly, the light can reach the photosensitive drum 106 keeping the sufficient luminous intensity and no total reflection. Therefore, it is possible to form a latent image with high resolution without shortening the luminescence life of the light emitting element 8 and without the short focal depth due to the large angle aperture. In other words, since there is no total reflection of the light in the light source in this embodiment, when a specific latent image is formed, the electric power consumption of this light source can be reduced more than the electric power consumption of the light source wherein the light goes through the low refractive index layer with the low directivity.

### Embodiment 12

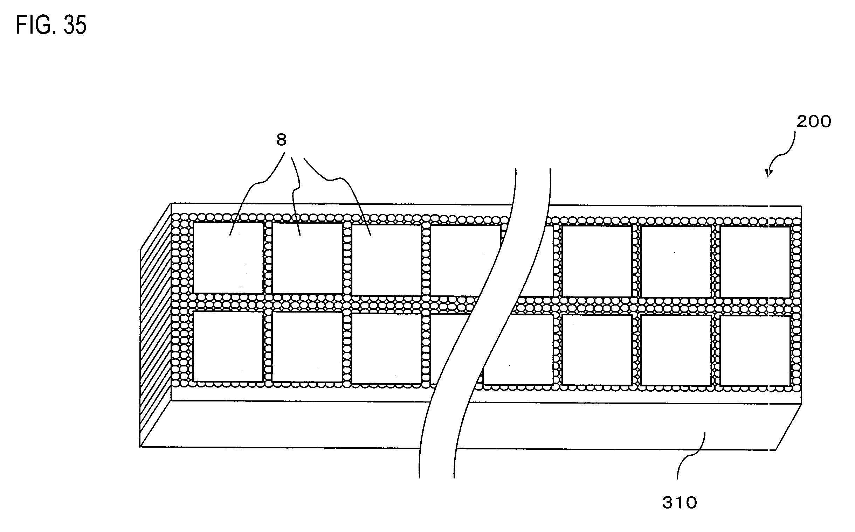

Fig. 35 shows the light transmitting means 310 composing the light source 200, in which each single lens 313 has a diameter smaller than the length and breadth of the light emitting element 8, and the configuration is explained hereinafter.

The light source 200 shown in Fig. 35, wherein the light emitting elements 8 are disposed on the light transmitting means 310, applies the single lens 313 of which diameter is smaller than the length and breadth of the light emitting element 8. That is to say, one of the light emitting elements 8 corresponds to a plurality of single lenses 313.

Regarding the single lens 313, as the specific number of single lenses is one unit, a plurality of single lenses 313 are placed within the space surrounded by the light absorbing layers 312 and the base frames 311 as shown in Fig. 6B, or placed in the same way after the light absorbing layer 312 is provided on the periphery of each single lens 313.

The light emitting element 8 may be formed on thus configured light transmitting means 310, of which producing method is the same as Embodiment 11. The diameter of the single lens 313 is smaller than the light emitting element 8 under such configuration, so that the light emitting element 8 can be formed regardless of the delicate positioning relation between the light emitting element 8 and the single lens 313. In this point of view, the light source 200 can be formed simply more than the aforementioned light source 200 that applies the light transmitting means 310 described in Embodiment 1.

### Embodiment 13

Consequently, here is explained about the light source 200 that is provided with the directivity means between the light emitting element 8 and the light transmitting means 310 for steering the advancing direction of each light emitted from the light emitting element 8 to a predetermined direction, and that is configured by forming the light transmitting means 310 and the directivity means and the light emitting element 8 in one piece.

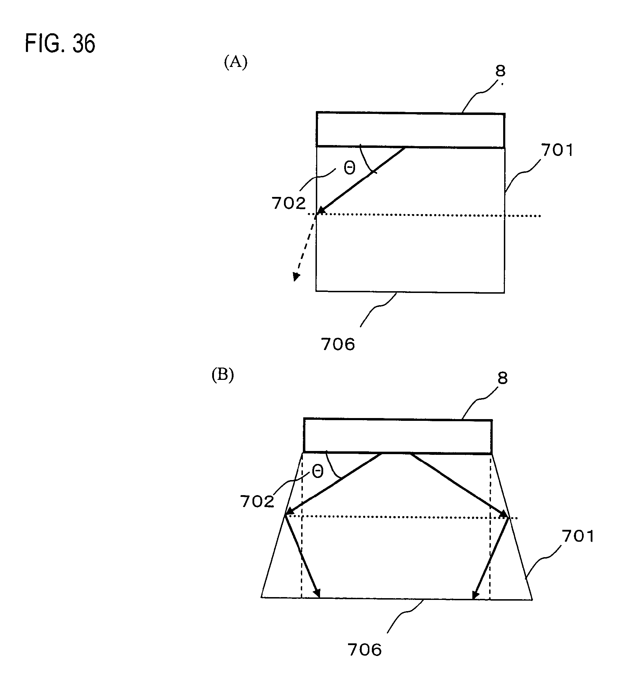

The directivity means is for leading more light into the light transmitting means 310 by correcting the advancing direction of each light. The directivity means in Embodiment 13 is provided with the mesa structure (mesa sheet), which is explained here. The mesa structure is for correcting a light direction to a predetermined direction by reflecting the incident light, and is configured in a form of polygonal frustum of pyramid wherein the light emitting element 8 is disposed on the side of the upper surface as shown in Fig. 36B. Specifically, a directivity means 701 without the mesa structure shown in Fig. 36A allows the side surface 701a of the directivity means 701 to transmit parts of or most of the light emitted from the light emitting element 8 at a specific incident angle θ, 702, so that the volume of the light incident into the bottom 706 could decrease. And the transmission efficiency could come down. On the contrary, a directivity means 701 with the mesa structure in Fig. 36B increases the possibility that the light emitted from the light emitting element 8 at a specific incident angle θ, 702, are reflected on the side surface 701a of the directivity means 701, so that the volume of the light to reach the base surface 706 could increase. In result, it is possible to improve the transmission efficiency. Besides, Fig. 36A and Fig. 36B show a comparison with the same ray of light emitted from the light emitting element 8.

Then, the following is concerned with the method of producing the light source combined optically with the directivity means 701 including the mesa structure.

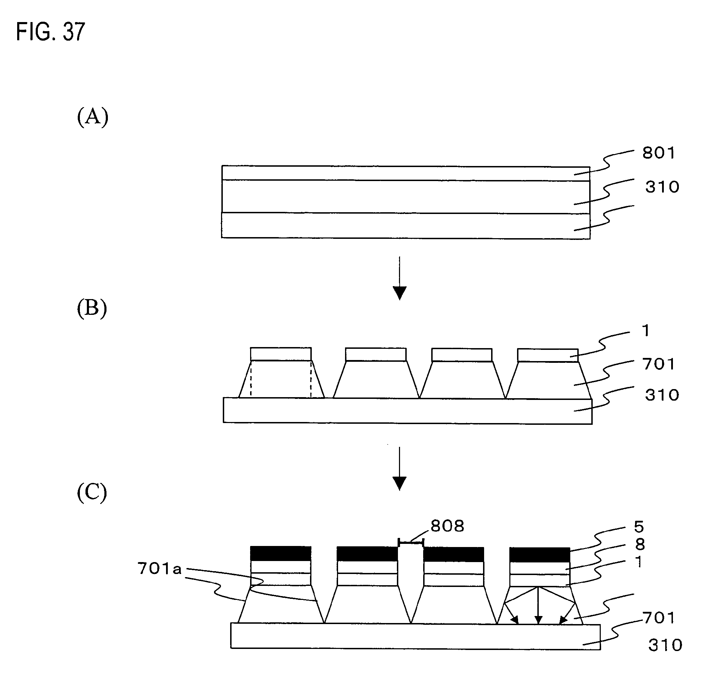

The directivity imparting layer 801 is formed on the light transmitting means 310 as described in Embodiments 11 and 12, as shown in Fig. 37(A). The forming is carried out by applying or evaporating a material to be the directivity imparting layer thereon. On the directivity imparting layer 801, the transparent electrode layer 2 is applied or evaporated in the same way. Besides, the directivity imparting layer 801 is made of such as Acrylic and Polyarylate, for example.

After the directivity imparting layer 801 and the transparent electrode layer 2 are, formed on the light transmitting means 310, the etching is performed for forming the small projection as described in Embodiment 5. According to these steps, the directivity imparting means 801 with the mesa structure and the transparent electrode element 1 are formed simultaneously as shown in Fig. 37(B).

Next, on the transparent electrode element 1 shown in Fig. 37(B), the organic EL to be the light emitting element 8 is evaporated, and then the metal to be the metal electrode layer 5 is evaporated thereon.

Now, the directivity means 701 is thicker than the transparent electrode element 1, the light emitting element 8, or the metal electrode layer 5. And there are sections 808 without upper surface of the directivity means 701 between the transparent electrode elements 1. When the organic EL and the metal are evaporated on the whole surface of the light transmitting means 310 on which the directivity means 701 with mesa structure and the transparent electrode element 1 are formed after the etching for obtaining the mesa structure, the organic EL and the metal evaporated on the section 808 flow down along the side surface 701a of the directivity means 701 and collect at the lower end part of the directivity means 701. Accordingly, the organic EL and the metal evaporated on each transparent electrode element 1 are separated from the organic EL and the metal evaporated the other transparent electrode elements 1.

Therefore, even if only each upper surface of the transparent electrode element 1 is not evaporated with the organic EL and the metal, when the organic EL and the metal are evaporated on the whole surface of the light transmitting means 301, the light emitting element 8 and the metal electrode layer 5 are formed on each directivity means 701. When the light emitting element 8 and the metal electrode layer 5 are formed by evaporating the organic EL and the metal on the whole surface of the light transmitting means 301, the masking is not required for the evaporation of the light emitting element 8 and the metal electrode layer 5. However, when the metal electrode layer 5 and the transparent electrode layer 1 are short-circuited, the light emitting element 8 does not emit the light. Accordingly, the metal electrode layer 5 may be formed by evaporating the metal on only the upper surface of the light emitting element 8.

As described above, since the light transmitting means, the directivity means, and the light emitting layer are combined in one piece, a layer that has the low directivity with the low refractive index does not exist between layers. According to such configuration, the light from the light emitting element is transmitted direct to the light transmitting means without passing through the low directivity layer. Therefore, most of the light can reach the photosensitive drum keeping the sufficient luminous intensity without leakage as described above. In addition, the directivity means in this embodiment steers (corrects) the light from the light emitting element to a specific degree, and this makes it possible to let most of the light from the light emitting element reach the light transmitting means. Moreover, the light that reached the light transmitting means keeps the luminous intensity higher than that in Embodiments 11 and 12 because there is no layer without the directivity.

Besides, when the light source is provided with the directivity means having the mesa structure, the light transmission efficiency between the organic EL layer and the photosensitive drum could be improved a four times as high as the light source without the directivity means.

It is not surprising that, if the directivity means is used, the size of the angle aperture is not need to be large to improve the light transmission efficiency. And the focal depth of the light transmitting means remain in deep. It is needless to say that the light source can form a latent image on the photosensitive drum exactly.

In the above description, the light source 200 of the image writing apparatus in this invention is applied to the color laser printer 100 of the tandem type. The light source of the image writing apparatus in this invention can be applied to the color laser printer except for the tandem type or the laser printer for the monochrome printing.

### Industrial Applicability

Since the present invention can convert the advancing direction of the light emitted from the light source of the image writing apparatus, it is not necessary to pay any attention to the direction to place the light source and the direction of the emitted light. Therefore, the image writing apparatus of this invention can downsize the printer by disposing the light source to face the direction that the sub scanning direction gets short.

In addition, the light source of the image writing apparatus is provided with the directivity means for imparting the directivity to the light emitted from the light emitting element, whereby most of light can be transmitted to the photosensitive drum through the light transmitting means without making the angle aperture of the light transmitting means large. Accordingly, while keeping the focal depth of the light transmitting means deep, it is possible to improve the light transmission efficiency between the light emitting element and the photosensitive drum, and to increase the luminous intensity on the photosensitive drum. In result, the light source of the image writing apparatus in this invention can be utilized as the light source to form a clear latent image on the photosensitive drum.

Moreover, since the light emitted from the light emitting element with large luminous area are condensed through the condensing means, it is possible to obtain the light with high luminous flux density by the condensing means. Since the light source is provided with the condensing means and the light emitting element extended to the sub scanning direction, the light emitted from the light emitting element can be condensed to the sub scanning direction, and the light with high luminous flux density can be obtained at short intervals in the main scanning direction. Therefore, the light source of the image writing means in this invention is available for the light source to form the latent image with high resolution on the photosensitive drum.

Further more, since the light transmitting means, the directivity means, and the light emitting layer are combined in one piece, a layer that has a low directivity with a low refractive index does not exist between layers. According to such configuration, the light from the light emitting element is transmitted direct to the light transmitting means without passing through the layer with low directivity. Therefore, the light source of the image writing apparatus in this invention is available for the light source wherein most of the light can reach the photosensitive drum keeping the sufficient luminous intensity almost without total reflection.

## Claims

1. A light source of image writing apparatus including a light emitting element, and a light transmitting means forming an image on a photosensitive drum by light emitted from the light emitting element, the light source comprising:
a converting means for converting an advancing direction of the light; and
the light transmitting means for forming the image on the photosensitive drum by the light of which advancing direction is converted by the converting means.

2. The light source of image writing apparatus according to claim 1, wherein the light emitting element is layered on a surface of a substrate so as to emit the light in a direction perpendicular to the surface; and
the converting means is formed on the light emitting element.

3. The image writing apparatus according to claim 1, wherein the converting means is formed on a surface of a substrate; and
the light emitting means is formed on the converting means so as to emit the light toward the converting means.

4. The light source of image writing apparatus according to claim 1, wherein the light emitting element is formed on a surface of a substrate so as to emit the light in a direction perpendicular to the surface; and
the converting means is formed on another surface of the substrate.

5. The light source of image writing apparatus according to claim 1, wherein the converting means is a prism for reflecting the light source toward a specific direction.

6. The light source of image writing apparatus according to claim 1, wherein the converting means is a light guide to lead the light to a specific direction.

7. The light source of image writing apparatus according to claim 4 or 6, wherein the specific direction is parallel to the substrate.

8. The light source of image writing apparatus according to claim 1, wherein the converting means converts the advancing direction of the light to a normal direction against the photosensitive drum.

9. The light source of image writing apparatus according to claim 1, wherein the image writing apparatus is provided with a plurality of photosensitive drums arranged in series.

10. The light source of the image writing apparatus according to claim 1, wherein the light emitting element consists of an organic electro luminescence.

11. An light source of image writing apparatus including a light emitting element, and a light transmitting means transmitting light emitted from the light emitting element to a photosensitive drum, the light source comprising:
a directivity means for imparting the directivity to the light emitted from the light emitting element; and
the light transmitting means for transmitting to the photosensitive drum the light to which the directivity is imparted by the directivity means.

12. The light source of image writing apparatus according to claim 11, wherein the light emitting element and the directivity means are formed in one piece.

13. The light source of image writing apparatus according to claim 11, wherein the light transmitting means is a lens; and
the directivity means limits the advancing direction of the light within a range of an angle aperture of the lens.

14. The light source of image writing apparatus according to claim 13, wherein the directivity means imparts the directivity to the light by reflecting the light in a light guide according to a difference between the refractive index inside the light guide and the refractive index outside the light guide.

15. The light source of image writing apparatus according to claim 14, wherein the light guide has a mesa structure.

16. The light source of image writing apparatus according to claim 15, wherein the light emitting element is disposed on an upper surface of the mesa structure;
a bottom of the mesa structure is disposed on a surface of a transparent substrate; and
the light transmitting means is disposed between another surface of the transparent substrate and the photosensitive drum.

17. The light source of image writing apparatus according to claim 13, wherein the directivity means imparts the directivity to the light according to a difference between the refractive index inside the light guide and the refractive index outside the light guide when the light is emitted from the light guide inside to the outside.

18. The image wiring apparatus according to claim 17, wherein the light guide is a beads sheet provided with a plurality of projections on a surface of a transparent substrate;
the light emitting element is disposed on another surface of the beads sheet; and
the light transmitting means is disposed between the surface of the beads sheet and the photosensitive drum.

19. The light source of image wiring means according to claim 17, wherein the light guide is a micro lens;
the light emitting element is disposed on a surface of a transparent substrate;
the micro lens is disposed between another surface of the transparent substrate and the light transmitting means; and
the light transmitting means is disposed between the micro lens and the photosensitive drum.

20. The light source of image writing apparatus according to claim 11, wherein the light emitting element consists of an organic electro luminescence.

21. A light source of image writing apparatus including a light emitting element, and a light transmitting means transmitting the light emitted from the light emitting element to a photosensitive drum and forming a latent image thereon, the light source comprising:
the light emitting element of which luminous area is larger than a pixel of the latent image; and
a condensing means for condensing the light emitted from the light emitting element and forming a section of the light on the photosensitive drum to be equal to an area of a pixel of the latent image.

22. The light source of image writing apparatus according to claim 21, wherein the light emitting element and the condensing means are formed in one piece.

23. The light source of image writing apparatus according to claim 21, wherein the condensing means condenses the light by reflecting the light in a light guide according to a difference between the refractive index inside the light guide and the refractive index outside the light guide.

24. The light source of image writing apparatus according to claim 23, wherein the light emitting element is disposed on a surface of the light guide;
another surface of the light guide is disposed on a surface of the transparent substrate; and
the light transmitting means is disposed between the light guide and the photo sensitive drum.

25. The light source of image writing apparatus according to claim 23, wherein the light emitting element is disposed on a surface of the transparent substrate;
the light guide is disposed on another surface of the transparent substrate; and
the light transmitting means is disposed between the light guide and the photosensitive drum.

26. The light source of image writing apparatus according to claim 21, wherein the condensing means condenses the light by reflecting the light when the light is emitted from the inside of the light guide to the outside according to a difference between the refractive index inside the light guide and the refractive index outside the light guide.

27. The light source of image writing apparatus according to claim 26, wherein the condensing means is a cylindrical lens or a micro lens.

28. The light source of image writing apparatus according to claim 26, wherein the light emitting element is disposed on a surface of a transparent substrate;
the light transmitting means is disposed between another surface of the transparent substrate and the condensing means;
the condensing means is disposed between the light transmitting means and the photosensitive drum.

29. The light source of image writing apparatus according to claim 26, wherein the light emitting element is disposed on a surface of a transparent substrate;
the condensing means is disposed between another surface of the transparent substrate and the light transmitting means; and
the light transmitting means is disposed between the condensing means and the photosensitive means.

30. The light source of image writing apparatus according to claim 21, wherein the light emitting element consists of an organic electro luminescence.

31. The light source of image writing apparatus according to claim 21, wherein the length of the light emitting element in the sub scanning direction is longer than the length of the pixel in the sub scanning direction.

32. A light source of image writing apparatus including a light emitting element, and a light transmitting means forming an image on a photosensitive drum by light emitted from the light emitting element, the light source comprising:
the light emitting element comprises a flat luminous unit; and
the light transmitting means and the light emitting element are formed in one piece.

33. The light source of image writing apparatus according to claim 32, wherein the flat luminous unit is an organic electro luminescence.

34. The light source according to claim 33, wherein the light transmitting means is a fiber lens alley including a plurality of single lenses.

35. The light source according to claim 34, wherein one of the light emitting elements corresponds to one of the single lenses.

36. The light source according to claim 34, wherein one of the light emitting elements corresponds to a plurality of the single lenses.

37. The light source according to claim 33, wherein a directivity means for orienting the advancing direction of each light from the light emitting element to a specific direction is provided between the light emitting element and the light transmitting mans; and
the light transmitting means, the directivity means, and the light emitting element are formed in one piece.

38. The light source according to claim 37, wherein the directivity mean has a mesa structure, and the upper surface of the mesa structure is provided with the light emitting element.

39. The light source according to claim 37, wherein the directivity means is a light guide for reflecting the light incident to the directivity means within the directivity means once or plural times.

40. A production method of a light source for image writing apparatus including a light emitting element and a light transmitting element forming an image on a photosensitive drum by light emitted from the light emitting element, the production method comprising the steps of;
forming a transparent electrode direct on the light transmitting means;
forming a light emitting layer comprising a flat luminous unit on the transparent electrode; and
forming a metal electrode layer on the light emitting layer.

41. The production method of light source according to claim 40, wherein the transparent electrode is an Indium-Tin Oxide electrode.

42. A production method of a light source for image writing apparatus including a light emitting element and a light transmitting element forming an image on a photosensitive drum by light emitted from the light emitting element, the production method comprising the steps of;
forming direct on the light transmitting means a directivity means for orienting an advancing direction of each light emitted from the light emitting element to a specific direction;
forming a transparent electrode on the directivity means; and
forming on the transparent electrode a light emitting layer comprising flat luminous units; and
forming a metal electrode layer on the light emitting layer.

43. The production method of light source according to claim 42, wherein the steps of forming the directivity means and the transparent electrode comprise further steps of;
forming direct on the light transmitting means a directivity imparting layer for imparting the directivity to the light;
forming a transparent electrode layer on an upper surface of the directivity imparting layer;
forming the directivity means and the transparent electrode by processing both the directivity imparting layer and the transparent electrode layer simultaneously under the patterning.
